(11) **EP 2 644 643 B1**

(12) **EUROPEAN PATENT SPECIFICATION**

(45) Date of publication and mention
of the grant of the patent:
**30.01.2019 Bulletin 2019/05**

(51) Int Cl.:
*C08J 5/18* *(2006.01)*     *C08L 23/26* *(2006.01)*
*C08L 27/18* *(2006.01)*     *C08L 67/04* *(2006.01)*
*B32B 27/36* *(2006.01)*

(21) Application number: **11843504.9**

(22) Date of filing: **21.11.2011**

(86) International application number:
**PCT/JP2011/076794**

(87) International publication number:
**WO 2012/070526 (31.05.2012 Gazette 2012/22)**

(54) **POLYLACTIC ACID-BASED FILM OR SHEET**

FOLIE ODER FOLIE AUF POLYMILCHSÄUREBASIS

FILM OU FEUILLE À BASE D'ACIDE POLYLACTIQUE

<table>
<tr><td>

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.11.2010 JP 2010264415
26.11.2010 JP 2010264416
26.11.2010 JP 2010264417
26.11.2010 JP 2010264418
26.11.2010 JP 2010264419
26.11.2010 JP 2010264420
26.11.2010 JP 2010264421
26.11.2010 JP 2010264422
26.11.2010 JP 2010264423
26.11.2010 JP 2010264424
26.11.2010 JP 2010264425
26.11.2010 JP 2010264426
29.11.2010 JP 2010265578
29.11.2010 JP 2010265579
29.11.2010 JP 2010265580
29.11.2010 JP 2010265581**

(43) Date of publication of application:
**02.10.2013 Bulletin 2013/40**

(73) Proprietor: **Nitto Denko Corporation
Osaka 567-8680 (JP)**

(72) Inventors:
• **ISHIGURO, Shigeki
Ibaraki-shi
Osaka 567-8680 (JP)**

</td><td>

• **YOSHIE, Satomi
Ibaraki-shi
Osaka 567-8680 (JP)**
• **SENDA, Hiroki
Ibaraki-shi
Osaka 567-8680 (JP)**
• **TAKAHIRA, Hitoshi
Ibaraki-shi
Osaka 567-8680 (JP)**
• **SEKIGUCHI, Yuka
Ibaraki-shi
Osaka 567-8680 (JP)**
• **HAYASHIUCHI, Rie
Ibaraki-shi
Osaka 567-8680 (JP)**
• **ENDO, Asuka
Ibaraki-shi
Osaka 567-8680 (JP)**

(74) Representative: **Grünecker Patent- und
Rechtsanwälte
PartG mbB
Leopoldstraße 4
80802 München (DE)**

(56) References cited:
**EP-A1- 2 522 696     EP-A1- 2 530 110
EP-A1- 2 554 596     WO-A1-2010/038833
WO-A1-2010/134454     WO-A1-2011/122464
JP-A- 2003 292 642     JP-A- 2007 130 893
JP-A- 2007 291 293     JP-A- 2009 013 271
JP-A- 2009 138 085     JP-A- 2009 173 715
JP-A- 2010 106 272**

</td></tr>
</table>

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to polylactic acid-based films or sheets. More specifically, the present invention relates to polylactic acid-based films or sheets which have satisfactory thermal stability and are resistant to breaking and tearing upon production and working thereof.

The present invention also relates to separators. More specifically, the present invention relates to separators (release liners) which include a polylactic acid-based film or sheet as a substrate, have superior thermal stability, and are resistant to breaking and tearing upon production and working. The separators may be used for surface protection of pressure-sensitive adhesive layers typically of pressure-sensitive adhesive tapes, pressure-sensitive adhesive sheets, and labels.

The present invention further relates to pressure-sensitive adhesive tapes or sheets. More specifically, the present invention relates to pressure-sensitive adhesive tapes or sheets which include a polylactic acid-based film or sheet as a substrate, have satisfactory thermal stability, and are resistant to breaking and tearing upon production and working.

In addition, the present invention relates to protective films (inclusive of protective sheets). More specifically, the present invention relates to protective films which include a polylactic acid-based film or sheet as a substrate, have satisfactory thermal stability, and are resistant to breaking and tearing upon production and working. The protective films are usable typically as protective films for surface protection of automotive wheels; protective films for surface protection typically of polarizing plates, wave plates, retardation films, reflective sheets, and other optical members for use typically in liquid crystal displays, as well as surface protection of electronic components; and protective films for surface protection of metal layers or metal oxide layers for use typically as electromagnetic shielding materials in plasma display panels and CRTs. Such protective films will be peeled off and removed when becoming unnecessary.

Background Art

Polylactic acids are biomass-derived polymers of plant origin and receive attention as resins to be substituted for polymers of petroleum origin. The polylactic acids, however, hardly crystallize by common film formation processes because of their low crystallization rates. For this reason, films including a resin composition containing a polylactic acid are disadvantageously thermally deformed and fail to maintain their shapes at a temperature equal to or higher than the glass transition temperature of the polylactic acid (about 60°C). To avoid this and to improve thermal stability of such polylactic acid-based resin films, several techniques have been proposed.

Typically, a known exemplary technique is a technique for inreasing the thermal stability of a polylactic acid-based resin film by forming a resin composition containing a polylactic acid into a film through melt extrusion, and biaxially stretching the film for stretch orientation and crystallization of the film. The film formed by this technique, however, disadvantageously undergoes extremely significant thermal shrinkage at elevated operating temperatures, because internal stress occurring upon stretching remains thereafter. An actual operating temperature of this film is therefore at highest up to about 100°C.

Japanese Unexamined Patent Application Publication (JP-A) No. H11-116788 (PTL 1) proposes a technique of blending a polylactic acid with a material having a high melting point to improve thermal stability. This technique, however, gives a film containing plant-derived components in a low percentage (low biomass ratio).

JP-A No. 2010-106272 (PTL 2) discloses a method of producing a polylactic acid-based resin film or sheet. In this method, a resin composition including a polylactic acid is subjected to melt film formation (film formation process using melting state) in a temperature range of from a temperature 15°C higher than a crystallization temperature (Tc) of the resin composition in a temperature drop process to a temperature 5°C lower than a melting temperature (Tm) of the resin composition in a temperature rise process; or a resin composition including a polylactic acid is subjected to melt film formation, and the resulting molten resin composition in the form of a film is cooled and solidified after subjected to a crystallization promoting step at a temperature in the range from a temperature 10°C higher than the crystallization temperature (Tc) of the resin composition in a temperature drop process to a temperature 10°C lower than the crystallization temperature (Tc). The resulting polylactic acid-based resin film or sheet, however, may suffer from breaking and/or tearing when the film or sheet is wound into a roll during production or working, although the film or sheet has better thermal stability. The film or sheet, when used as a substrate typically for a separator (release liner), for a pressure-sensitive adhesive tape, or for a protective film, the resulting article (e.g., separator) may suffer from breaking and/or tearing upon production or working of the article.

EP 2 644 643 B1

Citation List

Patent Literature

PTL 1: JP-A No. H11-116788
PTL 2: JP-A No. 2010-106272

WO201112264, EP2530110, EP2522696, EP2554596, WO2010038833, JP2007291293 and WO20101344 also disclose polylactic acid-based films or sheets.

Summary of Invention

Technical Problem

Accordingly, an object of the present invention is to provide a polylactic acid-based resin film or sheet which is resistant to melting and deformation even at an elevated temperature higher than 100°C and is resistant to breaking and tearing typically when the film or sheet is wound into a roll upon production or working of the film or sheet.

Another object of the present invention is to provide a separator including a polylactic acid-based film or sheet as a substrate, which separator is resistant to melting and deformation of the substrate even at an elevated temperature higher than 100°C, and is resistant to breaking and tearing typically when the separator is wound into a roll upon production or working thereof.

Yet another object of the present invention is to provide a pressure-sensitive adhesive tape or sheet including a polylactic acid-based film or sheet as a substrate, which pressure-sensitive adhesive tape or sheet is resistant to melting and deformation of the substrate even at an elevated temperature higher than 100°C, and is resistant to breaking and tearing typically when the pressure-sensitive adhesive tape or sheet is wound into a roll upon production or working thereof.

Still another object of the present invention is to provide a protective film including a polylactic acid-based film or sheet as a substrate, which protective film is resistant to melting and deformation of the substrate even at an elevated temperature higher than 100°C, and is resistant to breaking and tearing typically when the protecting film is wound into a roll upon production or working thereof.

Solution to Problem

After intensive investigations to achieve the objects, the present inventors have found that the objects can be achieved by allowing a polylactic acid-based resin film or sheet to have a melt endotherm of a region crystallized upon film formation at a specific level or higher and to have a tear strength at a certain level or higher. The present invention has been made based on these findings.

The present invention provides a polylactic acid-based film or sheet in accordance with claim 1. Preferred embodiments are defined in claims 2 to 7. Further, the present invention provides a separator in accordance with claim 8, comprising a separator substrate composed of the polylactic-acid-based film or sheet in accordance with claims 1 to 7. The present invention also provides a pressure sensitive adhesive tape or sheet in accordance with claim 9, comprising a substrate composed of the polylactic-acid-based film or sheet in accordance with claims 1 to 7. Moreover, the present invention provides a protective film in accordance with claim 10, comprising a substrate composed of the polylactic-acid-based film or sheet in accordance with claims 1 to 7.

Specifically the present invention provides a polylactic acid-based film or sheet, which is a resin film or sheet including a polylactic acid (A). The polylactic acid-based film or sheet has a melt endotherm $\Delta Hc'$ of 10 J/g or more, where the melt endotherm $\Delta Hc'$ is of a region crystallized upon film formation and specified by Expression (1) expressed as follows:

$$\Delta Hc' = \Delta Hm - \Delta Hc \qquad (1)$$

wherein $\Delta Hc$ represents an exotherm (J/g) associated with crystallization of the film or sheet in a temperature rise process after film formation; and $\Delta Hm$ represents an endotherm (J/g) associated with subsequent melting of the film or sheet, $\Delta Hc$ and $\Delta Hm$ determined with a DSC. The polylactic acid-based film or sheet has a tear strength of 2.5 N/mm or more

3

both in a machine direction (MD) and in a transverse direction (TD), the tear strength determined according to "Paper-Determination of tearing resistance-Elmendorf tearing tester method" specified in JIS P 8116.

The polylactic acid-based film or sheet may further include a fluoropolymer (B) in an amount of 0.5 to 15 parts by weight per 100 parts by weight of the polylactic acid (A). The fluoropolymer (B) may be a tetrafluoroethylene polymer.

The polylactic acid-based film or sheet may further include a crystallization promoter (C) in an amount of 0.1 to 15 parts by weight per 100 parts by weight of the polylactic acid (A).

The polylactic acid-based film or sheet may further include an acidic-functional-group-modified olefinic polymer (D) in an amount of 0.1 to 10 parts by weight per 100 parts by weight of the polylactic acid (A), in which the acidic-functional-group-modified olefinic polymer (D) has an acid value of 10 to 70 mg KOH/g and a weight-average molecular weight of 10000 to 80000.

The polylactic acid-based film or sheet may be a film or sheet formed by melt film formation, such as calendering.

The present invention provides, in another embodiment, a separator including a separator substrate; and a release-agent-treated layer present on or above at least one side of the separator substrate, in which the separator substrate is composed of the polylactic acid-based film or sheet.

In yet another embodiment, the present invention provides a pressure-sensitive adhesive tape or sheet including a substrate; and a pressure-sensitive adhesive layer present on or above at least one side of the substrate, in which the substrate is composed of the polylactic acid-based film or sheet.

In addition and advantageously, the present invention provides a protective film including a substrate; and a removable pressure-sensitive adhesive layer present on or above at least one side of the substrate, in which the substrate is composed of the polylactic acid-based film or sheet.

In addition to above, the present invention also relates to polylactic acid-based films or sheets, separators, pressure-sensitive adhesive tapes or sheets, and protective films as illustrated below.

[1-1] A polylactic acid-based film or sheet which is a resin film or sheet including a polylactic acid (A), in which the polylactic acid-based film or sheet contains a polyglycerol fatty acid ester and/or a polyglycerol-condensed hydroxy fatty acid ester (F) in a total amount of 1 to 20 parts by weight per 100 parts by weight of the polylactic acid (A); and the polylactic acid-based film or sheet has a melt endotherm $\Delta Hc'$ of 10 J/g or more, where the melt endotherm $\Delta Hc'$ is of a region crystallized upon film formation and specified by Expression (1) expressed as follows:

$$\Delta Hc' = \Delta Hm - \Delta Hc \qquad (1)$$

wherein $\Delta Hc$ represents an exotherm (J/g) associated with crystallization of the film or sheet in a temperature rise process after film formation; and $\Delta Hm$ represents an endotherm (J/g) associated with subsequent melting of the film or sheet, where $\Delta Hc$ and $\Delta Hm$ are determined by DSC.

[1-2] The polylactic acid-based film or sheet of [1-1], further including a fluoropolymer (B) in an amount of 0.5 to 15 parts by weight per 100 parts by weight of the polylactic acid (A).

[1-3] The polylactic acid-based film or sheet of [1-2], in which the fluoropolymer (B) is a tetrafluoroethylene polymer.

[1-4] The polylactic acid-based film or sheet of any one of [1-1] to [1-3], further including a crystallization promoter (C) in an amount of 0.1 to 15 parts by weight per 100 parts by weight of the polylactic acid (A).

[1-5] The polylactic acid-based film or sheet of any one of [1-1] to [1-4], further including an acidic-functional-group-modified olefinic polymer (D) in an amount of 0.1 to 10 parts by weight per 100 parts by weight of the polylactic acid (A), in which the acidic-functional-group-modified olefinic polymer (D) has an acid value of 10 to 70 mg KOH/g and a weight-average molecular weight of 10000 to 80000.

[1-6] The polylactic acid-based film or sheet of any one of [1-1] to [1-5], which is a film or sheet formed by melt film formation.

[1-7] The polylactic acid-based film or sheet of [1-6], in which the melt film formation is calendering.

[1-8] A separator including a separator substrate; and a release-agent-treated layer present on or above at least one side of the separator substrate, in which the separator substrate is composed of the polylactic acid-based film or sheet of any one of [1-1] to [1-7].

[1-9] A pressure-sensitive adhesive tape or sheet including a substrate; and a pressure-sensitive adhesive layer present on or above at least one side of the substrate, in which the substrate is composed of the polylactic acid-based film or sheet of any one of [1-1] to [1-7].

[1-10] A protective film including a substrate; and a removable pressure-sensitive adhesive layer present on or above at least one side of the substrate, in which the substrate is composed of the polylactic acid-based film or sheet of any one of [1-1] to [1-7].

[2-1] A polylactic acid-based film or sheet which is a resin film or sheet including a polylactic acid (A), in which the polylactic acid-based film or sheet contains a core-shell structured polymer (G) in an amount of 1 to 20 parts by weight per 100 parts by weight of the polylactic acid (A), where the core-shell structured polymer (G) includes a particulate rubber (rubber particle) and a graft polymer surrounding the particulate rubber; and the polylactic acid-based film or sheet has a melt endotherm ΔHc' of 10 J/g or more, where the melt endotherm ΔHc' is of a region crystallized upon film formation and specified by Expression (1) expressed as follows:

$$\Delta Hc' = \Delta Hm - \Delta Hc \qquad (1)$$

wherein ΔHc represents an exotherm (J/g) associated with crystallization of the film or sheet in a temperature rise process after film formation; and ΔHm represents an endotherm (J/g) associated with subsequent melting of the film or sheet, where ΔHc and ΔHm are determined by DSC.

[2-2] The polylactic acid-based film or sheet of [2-1], further including a fluoropolymer (B) in an amount of 0.5 to 15 parts by weight per 100 parts by weight of the polylactic acid (A).

[2-3] The polylactic acid-based film or sheet of [2-2], in which the fluoropolymer (B) is a tetrafluoroethylene polymer.

[2-4] The polylactic acid-based film or sheet of any one of [2-1] to [2-3], further including a crystallization promoter (C) in an amount of 0.1 to 15 parts by weight per 100 parts by weight of the polylactic acid (A).

[2-5] The polylactic acid-based film or sheet of any one of [2-1] to [2-4], further including an acidic-functional-group-modified olefinic polymer (D) in an amount of 0.1 to 10 parts by weight per 100 parts by weight of the polylactic acid (A), in which the acidic-functional-group-modified olefinic polymer (D) has an acid value of 10 to 70 mg KOH/g and a weight-average molecular weight of 10000 to 80000.

[2-6] The polylactic acid-based film or sheet of any one of [2-1] to [2-5], which is a film or sheet formed by a melt film formation.

[2-7] The polylactic acid-based film or sheet of [2-6], in which the melt film formation is calendering.

[2-8] A separator including a separator substrate; and a release-agent-treated layer present on or above at least one side of the separator substrate, in which the separator substrate is composed of the polylactic acid-based film or sheet of any one of [2-1] to [2-7].

[2-9] A pressure-sensitive adhesive tape or sheet including a substrate; and a pressure-sensitive adhesive layer present on or above at least one side of the substrate, in which the substrate is composed of the polylactic acid-based film or sheet of any one of [2-1] to [2-7].

[2-10] A protective film including a substrate; and a removable pressure-sensitive adhesive layer present on or above at least one side of the substrate, in which the substrate is composed of the polylactic acid-based film or sheet of any one of [2-1] to [2-7].

[3-1] A polylactic acid-based film or sheet which is a resin film or sheet including a polylactic acid (A), in which the polylactic acid-based film or sheet contains a soft aliphatic polyester (H) in an amount of 5 to 30 parts by weight per 100 parts by weight of the polylactic acid (A); and the polylactic acid-based film or sheet has a melt endotherm ΔHc' of 10 J/g or more, where the melt endotherm ΔHc' is of a region crystallized upon film formation and specified by Expression (1) expressed as follows:

$$\Delta Hc' = \Delta Hm - \Delta Hc \qquad (1)$$

wherein ΔHc represents an exotherm (J/g) associated with crystallization of the film or sheet in a temperature rise process after film formation; and ΔHm represents an endotherm (J/g) associated with subsequent melting of the film or sheet, where ΔHc and ΔHm are determined by DSC.

[3-2] The polylactic acid-based film or sheet of [3-1], further including a fluoropolymer (B) in an amount of 0.5 to 15 parts by weight per 100 parts by weight of the polylactic acid (A).

[3-3] The polylactic acid-based film or sheet of [3-2], in which the fluoropolymer (B) is a tetrafluoroethylene polymer.

[3-4] The polylactic acid-based film or sheet of any one of [3-1] to [3-3], further including a crystallization promoter (C) in an amount of 0.1 to 15 parts by weight per 100 parts by weight of the polylactic acid (A).

[3-5] The polylactic acid-based film or sheet of any one of [3-1] to [3-4], further including an acidic-functional-group-modified olefinic polymer (D) in an amount of 0.1 to 10 parts by weight per 100 parts by weight of the polylactic acid (A), in which the acidic-functional-group-modified olefinic polymer (D) has an acid value of 10 to 70 mg KOH/g and a weight-average molecular weight of 10000 to 80000.

[3-6] The polylactic acid-based film or sheet of any one of [3-1] to [3-5], which is a film or sheet formed by melt film formation.

[3-7] The polylactic acid-based film or sheet of [3-6], in which the melt film formation is calendering.

[3-8] A separator including a separator substrate; and a release-agent-treated layer present on or above at least one side of the separator substrate, in which the separator substrate is composed of the polylactic acid-based film or sheet of any one of [3-1] to [3-7].

[3-9] A pressure-sensitive adhesive tape or sheet including a substrate; and a pressure-sensitive adhesive layer present on or above at least one side of the substrate, in which the substrate is composed of the polylactic acid-based film or sheet of any one of [3-1] to [3-7].

[3-10] A protective film including a substrate; and a removable pressure-sensitive adhesive layer present on or above at least one side of the substrate, in which the substrate is composed of the polylactic acid-based film or sheet of any one of [3-1] to [3-7].

Advantageous Effects of Invention

Polylactic acid-based films or sheets according to embodiments of the present invention are resistant to melting and deformation even at an elevated temperature higher than 100°C, and are characteristically resistant to breaking and tearing while maintaining their inherent rigidity even when the films or sheets are wound into rolls and receive a tension upon production or working of the films or sheets. The films or sheets enable utilization of biomass-derived polymers in a wide range of fields and are of extremely great industrial significance.

Separators according to embodiments of the present invention are resistant to melting and deformation of the substrate even at an elevated temperature higher than 100°C, and are characteristically resistant to breaking and tearing while maintaining rigidity inherent to the substrate, even when the separators are wound into rolls and receive a tension upon production or working thereof.

Pressure-sensitive adhesive tapes or sheets according to embodiments of the present invention are resistant to melting and deformation of the substrate even at an elevated temperature higher than 100°C, and are characteristically resistant to breaking and tearing while maintaining ridigity inherent to the substrate, even when the pressure-sensitive adhesive tapes or sheets are wound into rolls and receive a tension upon production or working thereof.

Protective films according to embodiments of the present invention are resistant to melting and deformation of the substrate even at an elevated temperature higher than 100°C, and are characteristically resistant to breaking and tearing while maintaining rigidity inherent to the substrate, even when the protective films are wound into rolls and receive a tension upon production or working thereof.

Brief Description of Drawings

Fig. 1 is a schematic view illustrating an exemplary calendering film formation machine for use in production of a polylactic acid-based film or sheet as an embodiment of the present invention.

Fig. 2 is a schematic view illustrating an exemplary polishing film formation machine for use in production of a polylactic acid-based film or sheet as another embodiment of the present invention.

Description of Embodiments

[Polylactic Acid-based Film or Sheet]

A polylactic acid-based film or sheet according to an embodiment of the present invention is a resin film or sheet including a polylactic acid (A). Lactic acid as a material monomer for the polylactic acid includes an L- and D-optical isomers due to its assymmetric carbon atom. A polylactic acid (A) for use herein is a polymer mainly including L-lactic acid. A polymer has a higher crystallinity and a higher melting point with a decreasing content of D-lactic acid contaminated as an impurity during the production. Lactic acid to be used therefore preferably has an L-lactic acid purity as high as possible and more preferably has an L-lactic acid purity of 95% or more. The polylactic acid (A) may further include other copolymerizable component in addition to lactic acid.

The other copolymerizable component is typified by polyol compounds such as ethylene glycol, propylene glycol, 1,3-propanediol, butanediol, pentanediol, neopentyl glycol, hexanediol, heptanediol, octanediol, nonanediol, decanediol, 1,4-cyclohexanedimethanol, glycerol, pentaerythritol, polyethylene glycol, polypropylene glycol, polytetramethylene glycol, and bisphenol-A; polycarboxylic acids such as oxalic acid, malonic acid, glutaric acid, adipic acid, sebacic acid, azelaic acid, dodecanedioic acid, cyclohexanedicarboxylic acid, terephthalic acid, isophthalic acid, phthalic acid, naphthalenedicarboxylic acid, bis(p-carboxyphenyl)methane, anthracenedicarboxylic acid, 4,4'-diphenyl ether dicarboxylic acid, 5-(sodiosulfo)isophthalic acid, and 5-tetrabutylphosphonium isophthalic acid; hydroxycarboxylic acids such as glycolic acid, hydroxypropionic acid, hydroxybutyric acid, hydroxyvaleric acid, hydroxycaproic acid, and hydroxybenzoic acid; and lactones such as propiolactone, valerolactone, caprolactone, undecalactone, and 1,5-oxepan-2-one. A total amount of these copolymerizable components is preferably 0 to 30 mole percent and more preferably 0 to 10 mole percent, based on the total amount of monomer components constituting the polylactic acid (A).

The polylactic acid (A) may have a weight-average molecular weight of typically $1x 10^4$ to $40x 10^4$, preferably $5x 10^4$ to $30x 10^4$, and more preferably $8x 10^4$ to $15x 10^4$. The polylactic acid (A) may have a melt flow rate of typically 0.1 to 50 g/10 min, preferably 0.2 to 20 g/10 min, more preferably 0.5 to 10 g/10 min, and particularly preferably 1 to 7 g/10 min as determined according to JIS K-7210 (Test Condition 4) at 190°C under a load of 21.2 N. A polylactic acid having an excessively high melt flow rate may cause a film or sheet obtained by film formation to have insufficient mechanical properties and/or insufficient thermal stability. In contrast, a polylactic acid having an excessively low melt flow rate may cause an excessively high load on film formation.

As used herein the term "weight-average molecular weight" refers to a value measured by gel permeation chromatography (GPC) in terms of a polystyrene standard. GPC measurement can be performed under conditions below.

Column: TSKgel SuperHZM-H/HZ2000/HZ1000
Column size: 4.6 mm in inner diameter by 150 mm in length
Eluting solvent: Chloroform
Flow rate: 0.3 ml/min
Detector: RI
Column temperature: 40°C
Injection volume of sample: 10 $\mu$l

A route to a polylactic acid is not limited, but is represented by a lactide method and a direct polymerization method. In the lactide method, lactic acid is heated and dehydrated/condensed to give a low molecular weight polylactic acid, this is thermally decomposed under reduced pressure to give a cyclic dimer of lactic acid, i.e., lactide, and ring-opening polymerization of the lactide in the presence of a metal salt catalyst (e.g., tin(II) octanoate) gives a high molecular weight polylactic acid. In the direct polymerization method, lactic acid is heated under reduced pressure in a solvent (e.g., diphenyl ether), polymerized while removing water to suppress hydrolysis, and thereby directly yields a polylactic acid.

The polylactic acid (A) may be a commercial product. The commercial product is exemplified by those available under the trade names "LACEA H-400" and "LACEA H-100" (each from Mitsui Chemicals Inc.); and the trade names "TERRAMAC TP-4000" and "TERRAMAC TE-4000" (each from UNITIKA LTD.). The polylactic acid (A) may also be one produced by a known or customary polymerization process such as emulsion polymerization or solution polymerization.

The polylactic acid-based film or sheet according to the present invention may contain the polylactic acid (A) in a content of usually 60 percent by weight or more, preferably 70 percent by weight or more, more preferably 80 percent by weight or more, and particularly preferably 85 percent by weight or more, for a higher biomass ratio. The upper limit of the polylactic acid (A) content may be typically 97 percent by weight, preferably 95 percent by weight, and more preferably 93 percent by weight. As used herein the term "biomass ratio" refers to a ratio of the dry weight of used biomass to the dry weight of the film or sheet. Also as used herein the term "biomass" refers to a renewable organic resource of biological origin, except fossil resource.

The polylactic acid-based film or sheet according to the present invention has a melt endotherm ΔHc' as specified by Expression (1) of 10 J/g or more of a region crystallized upon film formation, in which Expression (1) is expressed as follows:

$$\Delta Hc' = \Delta Hm - \Delta Hc \qquad (1)$$

wherein ΔHc represents an exotherm (J/g) associated with crystallization of the film or sheet in a temperature rise process after film formation; and ΔHm represents an endotherm (J/g) associated with subsequent melting of the film or sheet, where ΔHc and ΔHm are determined by DSC.

The exotherm ΔHc corresponds to an exotherm associated with crystallization of a region in a temperature rise process, which region has not been crstallized upon film formation of the film or sheet; and the endotherm ΔHm corresponds to an endotherm upon melting of a region crystallized during the film formation and melting of a region crystallized during the temperature rise process. These values are measured by differential scanning calorimetry (DSC) as an area (heat quantity) of a crystallization exothermic peak and an area (heat quantity) of a melting endothermic peak. The melt endotherm ΔHc' is determined by subtracting ΔHc from ΔHm and corresponds to a melt endotherm of a region crystallized upon film formation. The melt endotherm ΔHc' therefore acts as an index not only for degree of crystallinity but also as an index for thermal stability of a polylactic acid-based film or sheet.

Such a polylactic acid-based film or sheet having a melt endotherm ΔHc' of 10 J/g or more has satisfactory thermal stability and is resistant to melting and deformation even at an elevated temperature higher than 100°C (e.g., at a temperature of 120°C or higher). The polylactic acid-based film or sheet can therefore be worked at an elevated temperature. The polylactic acid-based film or sheet has a melt endotherm ΔHc' of preferably 12 J/g or more, more preferably 14 J/g or more, and particularly preferably 15 J/g or more. The polylactic acid-based film or sheet preferably has a higher melt endotherm ΔHc' in view of thermal stability, but, if having an excessively high melt endotherm ΔHc', may become excessively rigid and thereby have insufficient tear resistance. To avoid this, the polylactic acid-based film or sheet may have a melt endotherm ΔHc' of preferably 40 J/g or less, more preferably 35 J/g or less, and particularly preferably 30 J/g or less.

In an embodiment of the present invention, the polylactic acid-based film or sheet may further include a fluoropolymer (B). The fluoropolymer (B) may act typically as a melt tension modifier or a crystallization promoter. The fluoropolymer (B) is exemplified by tetrafluoroethylene polymers, polychlorotrifluoroethylenes, poly(vinylidene fluoride)s, and poly(vinyl fluoride)s. Each of different fluoropolymers (B) may be used alone or in combination. Of fluoropolymers (B), at least one tetrafluoroethylene polymer (B') is advantageously usable.

The tetrafluoroethylene polymer (B') may be a homopolymer of tetrafluoroethylene or a copolymer of tetrafluoroethylene with another monomer. Exemplary tetrafluoroethylene polymers (B') include polytetrafluoroethylenes, perfluoroalkoxyalkanes (copolymers of tetrafluoroethylene with a perfluoroalkyl vinyl ether), perfluoro-ethylene/propene copolymers (copolymers of tetrafluoroethylene with hexafluoropropylene), ethylene-tetrafluoroethylene copolymers, and tetrafluoroethylene-perfluorodioxole copolymers. Among them, polytetrafluoroethylenes are preferred. Each of different tetrafluoroethylene polymers (B') may be used alone or in combination.

The fluoropolymer (B) increases melt tension of a resin composition containing a polylactic acid (A), enables orientation-induced crystallization typically in a flow field of a melt film formation, and thereby promotes the crystallization of the polylactic acid (A). The fluoropolymer (B), when incorporated into the resin composition containing the polylactic acid (A), allows the resin composition to have not only a higher melt tension but also a higher melt viscosity. Typically when a film is formed from the resin composition using the calender rolls, the fluoropolymer (B) thereby protects the resin composition in the form of a film from being extednded or insufficiently released (peeled) off from calender rolls upon releasing of the film from the calender rolls. Of such fluoropolymers, a tetrafluoroethylene polymer (B'), for example, also acts as a crystal nucleating agent for the polylactic acid (A) and may thereby further promote the crystallization of the polylactic acid (A) by setting the temperature of the resin composition immediately after film formation at the vicinity of the crystallization temperature. The polylactic acid-based film or sheet, when further including a fluoropolymer (B) [of which a tetrafluoroethylene polymer (B') is preferred], may enjoy promoted crystallization of the polylactic acid (A) and may have a higher melt endotherm ΔHc'.

The action of the tetrafluoroethylene polymer (B') as a crystal nucleating agent for the polylactic acid (A) may probably depend on the crystal structure of the tetrafluoroethylene polymer (B'). A wide-angle X-ray diffraction analysis revealed that the polylactic acid has a spacing of lattice planes (interplanar spacing) of 4.8 angstroms, whereas a tetrafluoroethylene polymer (B') has a spacing of lattice planes of 4.9 angstroms. This speculatively indicates that the tetrafluoroethylene polymer (B') has an epitaxial action and thereby acts as a crystal nucleating agent for the polylactic acid (A). As used herein the term "epitaxial action" refers to such a growth mode in which the polylactic acid (A) undergoes crystal growth on the surface of the tetrafluoroethylene polymer (B'), and crystals of the polylactic acid (A) are aligned along the crystal face of the crystalline surface of the tetrafluoroethylene polymer (B').

Tetrafluoroethylene-based polymers (B') have an identical spacing of lattice planes to each other, not varying depending on the types thereof, because the spacing of lattice planes of a tetrafluoroethylene polymer (B') is determined by the crystalline form of tetrafluoroethylene moiety even when the polymer is a copolymer of tetrafluoroethylene with another monomer. The amount of the other monomer component in a copolymer as the tetrafluoroethylene polymer (B') is usually preferably 5 percent by weight or less, although the amount is not critical within such a range as to maintain the crystaline form of a polytetrafluoroethylene and not to significantly affect properties thereof.

The tetrafluoroethylene polymer (B') may be one prepared by any polymerization method but is particularly preferably one prepared by emulsion polymerization. This is probably because such a tetrafluoroethylene polymer prepared by emulsion polymerization is readily formed into fibers, readily takes a network structure in the polylactic acid (A), improves the melt tension of a resin composition containing the polylactic acid (A), and effectively contributes to promotion of the crystallization of the polylactic acid (A) in a flow field during melt film formation.

For more uniform dispersion in the polylactic acid (A), the tetrafluoroethylene polymer (B') for use herein may be particles which have been modified with a (meth)acrylic ester polymer or another polymer having good affinity for the polylactic acid (A). The tetrafluoroethylene polymer (B') of this type is exemplified by acrylic-modified polytetrafluoroethylenes.

Though not critical, the fluoropolymer (B) [e.g., tetrafluoroethylene polymer (B')] has a weight-average molecular weight of usually $100 \times 10^4$ to $1000 \times 10^4$ and preferably $200 \times 10^4$ to $800 \times 10^4$.

The fluoropolymer (B) [e.g., tetrafluoroethylene polymer (B')] may be a commercial product. Typically, commercial products of polytetrafluoroethylenes are exemplified by those available under the trade names "Fluon CD-014," "Fluon CD-1," and "Fluon CD-145" from Asahi Glass Co., Ltd. Commercial products of acrylic-modified polytetrafluoroethylenes are exemplified by those available under the trade names METABLEN A series, such as "METABLEN A-3000" and "METABLEN A-3800" from Mitsubishi Rayon Co., Ltd.

The fluoropolymer (B) [particularly the tetrafluoroethylene polymer (B')] may be contained in the polylactic acid-based film or sheet in a content of usually 0.5 to 15 parts by weight, and to effectively increase the melt tension, maintain the biomass ratio at satisfactory level, and provide a good surface condition, in a content of preferably 0.7 to 10 parts by weight and more preferably 1 to 5 parts by weight, per 100 parts by weight of the polylactic acid (A). The fluoropolymer (B) [particularly tetrafluoroethylene polymer (B')], if contained in a content of less than 0.5 part by weight, may not so effectively increase the melt tension; and, if contained in a content of more than 15 parts by weight, may exhibit saturated effects not proportional to the amount and may disadvantageously cause a lower biomass ratio.

Exemplary specific methods for allowing a polylactic acid-based film or sheet to have a melt endotherm $\Delta Hc'$ of 10 J/g or more include (1) formation of a film from a resin composition containing a polylactic acid (A) through calendering or another melt film formation; (2) formation of a film from a resin composition containing both a polylactic acid (A) and a crystallization promoter; and (3) a combination of these methods. The melt film formation will be described later.

Of the fluoropolymers (B), some fluoropolymers [e.g., tetrafluoroethylene polymers (B')] are usable as crystallization promoters, as described above. However, other substances are also usable as the crystallization promoter herein. Such a crystallization promoter [hereinafter also referred to as a "crystallization promoter (C)"] is not limited, as long as having a crystallization promoting effect, but is preferably selected from among substances having a crystal structure with a spacing of lattice planes similar to that of the polylactic acid (A). This is because a substance having a spacing of lattice planes nearer to that of the polylactic acid (A) exhibits higher effects as a crystal nucleating agent for the polylactic acid (A). Exemplary crystallization promoters (C) include organic substances such as melamine polyphosphates, melamine cyanurate, zinc phenylphosphonate, calcium phenylphosphonate, and magnesium phenylphosphonate; and inorganic substances such as talc and clay. Among them, zinc phenylphosphonate is preferred because of having a spacing of lattice planes nearest to that of the polylactic acid (A) and satisfactorily effectively promoting crystallization of the polylactic acid (A). Each of different crystallization promoters (C) may be used alone or in combination.

The crystallization promoter (C) can also be a commercial product. Typically, exemplary commercial products of zinc phenylphosphonate include one available under the trade name "ECOPROMOTE" from Nissan Chemical Industries, Ltd.

The crystallization promoter (C) may be contained in the polylactic acid-based film or sheet in a content of usually 0.1 to 15 parts by weight, and, for more satisfactorily effective crystallization promotion and maintenance of the biomass ratio at satisfactory level, in a content of preferably 0.3 to 10 parts by weight, per 100 parts by weight of the polylactic acid (A). The crystallization promoter (C), if contained in a content of less than 0.1 part by weight, may not satisfactorily effectively promote crystallization; and, if contained in a content of more than 15 parts by weight, may not exhibit effects proportional to the amount and may disadvantageously cause a lower biomass ratio. When a tetrafluoroethylene polymer (B') is used as the fluoropolymer (B) in an amount of 0.5 to 15 parts by weight per 100 parts by weight of the polylactic acid (A), the crystallization promoter (C) may be contained in a content of usually 0.1 to 5 parts by weight and preferably 0.3 to 3 parts by weight per 100 parts by weight of the polylactic acid (A), for more satisfactorily effective crystallization promotion and maintenance of satisfactory biomass ratio. In this case, the crystallization promoter (C), if contained in a content of less than 0.1 part by weight, may not satisfactorily effectively promote the crystallization; and, if contained in a content of more than 5 parts by weight, may not exhibit effects proportional to the amount and may disadvantageously cause a lower biomass ratio.

The polylactic acid-based film or sheet according to the present invention has a tear strength of 2.5 N/mm or more both in a machine direction (MD) and in a transverse direction (TD). A polylactic acid-based film or sheet having such a tear strength is resistant to breaking and tearing even in a process where the film or sheet receives a tension upon production or working thereof. The film or sheet is also resistant to breaking and tearing when the film or sheet is wound into a roll or subjected to working such as die cutting. The polylactic acid-based film or sheet having such a tear strength, when used as a substrate typically for a separator, a pressure-sensitive adhesive tape or sheet, or a protective film, the resulting separator, pressure-sensitive adhesive tape or sheet, or protective film is resistant to breaking and tearing even in a process where the separator, pressure-sensitive adhesive tape or sheet, or protective film receives a tension upon production or working thereof. The separator, pressure-sensitive adhesive tape or sheet, or protective film is also resistant to breaking and tearing even when the article is wound into a roll or subjected to working such as die cutting.

The tear strength herein can be measured with a tear strength tester according to "Paper-Determination of tearing resistance-Elmendorf tearing tester method" specified in JIS P 8116. Such a polylactic acid-based film or sheet having a tear strength of 2.5 N/mm or more both in a machine direction (MD) and in a transverse direction (TD) is resistant to breaking and tearing not only upon production of the film or sheet but also upon winding into a roll or upon working as described above, can thereby undergo working of various kinds, and is usable in a dramatically wider range.

The polylactic acid-based film or sheet has a tear strength of preferably 2.8 N/mm or more, and more preferably 3.2 N/mm or more, both in a machine direction (MD) and in a transverse direction (TD). The higher the tear strength is, the more preferred. Though not critical, the tear strength may be typically 30 N/mm or less, may be 20 N/mm or less, and may usually be 15 N/mm or less in terms of its upper limit.

The method for allowing a polylactic acid-based film or sheet to have a tear strength within the above-specified range is a method of forming a film from a resin composition including a polylactic acid (A) in combination with a tear-resistance improver (E).

The tear-resistance improver (E) is selected from the group comprising (a) a polyglycerol fatty acid ester and/or a polyglycerol-condensed hydroxy fatty acid ester [hereinafter also referred to as a "polyglycerol fatty acid ester and/or polyglycerol-condensed hydroxy fatty acid ester (F)"]; (b) a core-shell structured polymer including a particulate rubber and a graft layer present outside of the particulate rubber [hereinafter also referred to as a "core-shell structured polymer (G) including a particulate rubber and a graft layer present outside of the particulate rubber"]; and (c) a soft aliphatic polyester [hereinafter also referred as a "soft aliphatic polyester (H)"]. Each of these substances of different categories may be used alone or in combination.

Of the polyglycerol fatty acid ester and/or polyglycerol-condensed hydroxy fatty acid ester (a), the polyglycerol fatty acid ester is an ester obtained through reaction of a polyglycerol and a fatty acid. The polyglycerol as one constituent of the polyglycerol fatty acid ester is exemplified by diglycerol, triglycerol, tetraglycerol, pentaglycerol, hexaglycerol, heptaglycerol, octaglycerol, nonaglycerol, decaglycerol, and dodecaglycerol. Each of them may be used alone or in combination as a mixture. The polyglycerol has an average degree of polymerization of preferably 2 to 10.

The fatty acid as the other constituent of the polyglycerol fatty acid ester may be any of fatty acids having 12 or more carbon atoms. Exemplary fatty acids include lauric acid, myristic acid, palmitic acid, stearic acid, oleic acid, linoleic acid, linolenic acid, eicosadienoic acid, arachidonic acid, behenic acid, erucic acid, lichinoleic acid, 12-hydroxystearic acid, and hydrogenated castor oil fatty acids. Each of them may be used alone or in combination as a mixture.

The polyglycerol-condensed hydroxy fatty acid ester is an ester prepared through a reaction of a polyglycerol and a condensed hydroxy fatty acid. The polyglycerol as one constituent of the polyglycerol-condensed hydroxy fatty acid ester is exemplified by those listed as the constituent of the polyglycerol fatty acid ester.

The condensed hydroxy fatty acid as the other constituent of the polyglycerol-condensed hydroxy fatty acid ester is a condensate of a hydroxy fatty acid. The hydroxy fatty acid is not limited, as long as being a fatty acid having at least one hydroxyl group per molecule, and is exemplified by lichinoleic acid, 12-hydroxystearic acid, and hydrogenated castor oil fatty acids. The condensed hydroxy acid may have a degree of condensation of typically 3 or more and preferably 3 to 8. Each of different condensed hydroxy fatty acids may be used alone or in combiantion as a mixture.

The polyglycerol fatty acid ester and the polyglycerol-condensed hydroxy fatty acid ester for use herein may be commercial products. Exemplary commercial products of polyglycerol fatty acid esters include those available under the trade names CHIRABASOL series such as "CHIRABASOL VR-10" and "CHIRABASOL VR-2" from Taiyo Kagaku Corporation.

Exemplary particulate rubbers (rubber particles) for constituting the core in the core-shell structured polymer (b) including a particulate rubber and a graft layer present outside of the particulate rubber include acrylic rubbers, butadienic rubbers, and silicone/acrylic composite rubbers. Exemplary polymers for constituting the shell include styrenic resins such as polystyrenes; and acrylic resins such as poly(methyl methacrylate)s.

The core-shell structured polymer has an average diameter of particles (aggregates of primary particles) of typically 50 to 500 $\mu$m and preferably 100 to 250 $\mu$m. This core-shell structured polymer, when blended with the polylactic acid (A) and subjected to melting/kneading, disperses as primary particles. The primary particles have an average particle diameter of typically 0.1 to 0.6 $\mu$m.

The core-shell structured polymer may be a commercial product. Exemplary commercial products of the core-shell structured polymer include those available under the trade names PARALOID series such as "PARALOID EXL2315" (of which PARALOID EXL series are preferred) from Rohm and Haas Japan K.K.; and the trade names "METABLEN S-2001" and other METABLEN S types, "METABLEN W-450A" and other METABLEN W types, "METABLEN C-223A" and other METABLEN C types, and METABLEN E-901" and other METABLEN E types, each from Mitsubishi Rayon Co., Ltd.

The soft aliphatic polyester (c) includes aliphatic polyesters and aliphatic-aromatic copolyesters. Exemplary soft aliphatic polyesters (c) (aliphatic polyesters and aliphatic-aromatic copolyesters) include polyesters obtained from a polyhydric alcohol (e.g., a diol) and a polycarboxylic acid (e.g., a dicarboxylic acid) and employing at least an aliphatic diol as the diol, and at least an aliphatic dicarboxylic acid as the dicarboxylic acid; and polymers of an aliphatic hydroxycarboxylic acid having 4 or more carbon atoms. The aliphatic diol is exemplified by aliphatic diols (including alicyclic diols) having 2 to 12 carbon atoms, such as ethylene glycol, 1,2-propanediol, 1,3-propanediol, 2,2-dimethyl-1,3-propanediol, 1,2-butanediol, 1,4-butanediol, neopentyl glycol, 1,5-pentanediol, 1,6-hexanediol, cyclohexanediol, 1,3-cyclohexanedimethanol, and 1,4-cyclohexanedimethanol. The aliphatic dicarboxylic acid is exemplified by saturated aliphatic dicarboxylic acids (including alicyclic dicarboxylic acids) having 2 to 12 carbon atoms, such as succinic acid, malonic acid, glutaric acid, adipic acid, pimelic acid, suberic acid, azelaic acid, sebacic acid, dodecanedioic acid, 1,3-cyclohexanedicarboxylic acid, and 1,4-cyclohexanedicarboxylic acid. In the polyester employing at least an aliphatic diol as the diol component and at least an aliphatic dicarboxylic acid as the dicarboxylic acid component, the aliphatic diol may constitute typically 80 percent by weight or more, preferably 90 percent by weight or more, and more preferably 95 percent by weight or more, of the entire diol components. The remainder may for example be an aromatic diol. In the polyester employing at least an aliphatic diol as the diol component and at least an aliphatic dicarboxylic acid as the dicarboxylic acid component, the aliphatic dicarboxylic acid may constitute typically 20 percent by weight or more, preferably 30 percent by weight or more, and more preferably 50 percent by weight or more, of the entire dicarboxylic acid components. The remainder may for example be an aromatic dicarboxylic acid (e.g., terephthalic acid). The aliphatic hydroxycarboxylic acid having 4 or more carbon atoms is exemplified by hydroxycarboxylic acids having 4 to 12 carbon atoms, such as hydroxybutyric acids, hydroxyvaleric acids, hydroxypentanoic acids, hydroxyhexanoic acids, hydroxydecanoic acids, and hydroxydodecanoic acids. The soft aliphatic polyester (c) (aliphatic polyester or aliphatic-aromatic copolyester) may have a weight-average molecular weight of typically $5x 10^4$ to $40x 10^4$ and preferably $8x 10^4$ to $25x 10^4$.

Representative examples of the soft aliphatic polyester (c) include poly(butylene succinate)s, poly(butylene succinate-co-adipate)s, poly(ethylene succinate)s, poly(ethylene succinate-co-adipate)s, poly(butylene adipate-co-terephthalate)s, poly(butylene sebacate-co-terephthalate)s, and polyhydroxyalkanoates.

The soft aliphatic polyester (c) for use herein may be a commercial product. Typically, a poly(butylene succinate) is available under the trade name "GS Pla AZ91T" from Mitsubishi Chemical Corporation; a poly(butylene succinate-co-adipate) is available under the trade name "GS Pla AD92W" from Mitsubishi Chemical Corporation; and a poly(butylene adipate-co-terephthalate) is available under the trade name "Ecoflex" from BASF Japan Ltd.

The polylactic acid-based film or sheet may contain the tear-resistance improver (E) in a content (total amount) of usually 1 part by weight or more, preferably 1.5 parts by weight or more, and more preferably 2 parts by weight or more per 100 parts by weight of the polylactic acid (A) for effective improvement of tear resistance. The polylactic acid-based film or sheet, if containing the tear-resistance improver (E) in an excessively high content, may often suffer from insufficient degree of crystallinity and crystallization rate, and insufficient thermal stability and may undergo bleedout of the tear-resistance improver (E). To avoid these, the polylactic acid-based film or sheet may contain the tear-resistance improver (E) in a content (total amount) of preferably 30 parts by weight or less, more preferably 25 parts by weight or less, furthermore preferably 20 parts by weight or less, and particularly preferably 15 parts by weight or less, per 100 parts by weight of the polylactic acid (A).

When (a) a polyglycerol fatty acid ester and/or a polyglycerol-condensed hydroxy fatty acid ester (F), or (b) a core-shell structured polymer (G) including a particulate rubber and a graft layer present outside of the particulate rubber is used as the tear-resistance improver (E), the content thereof [total amount of (a), or total amount of (b)] is each usually 1 part by weight or more, preferably 1.5 parts by weight or more, and more preferably 2 parts by weight or more, per 100 parts by weight of the polylactic acid (A). To avoid the aforementioned disadvantages, the content is preferably 20 parts by weight or less, more preferably 15 parts by weight or less, furthermore preferably 12 parts by weight or less, and particularly preferably 10 parts by weight or less. When (c) a soft aliphatic polyester (H) is used as the tear-resistance improver (E), the content thereof is usually 5 parts by weight or more and preferably 10 parts by weight or more, per 100 parts by weight of the polylactic acid (A). To avoid the aforementioned disadvantages, the content is preferably 30 parts by weight or less, more preferably 25 parts by weight or less, and furthermore preferably 20 parts by weight or less.

A polylactic acid-based film or sheet, when containing (a) a polyglycerol fatty acid ester and/or polyglycerol-condensed hydroxy fatty acid ester (F), (b) a core-shell structured polymer (G) including a particulate rubber and a graft layer present outside of the particulate rubber, or (c) a soft aliphatic polyester (H) in a content in the avove-specified range, can have a significantly improved tear strength. For example, the polylactic acid-based film or sheet can have a tear strength of 2.5 N/mm or more both in a machine direction (MD) and in a transverse direction (TD).

In an embodiment, a polylactic acid-based film or sheet according to the present invention may further include an acidic-functional-group-modified olefinic polymer (D) in addition to the components. The polylactic acid-based film or sheet, when further including the acidic-functional-group-modified olefinic polymer (D) in addition to the polylactic acid (A), can exhibit lubricity to rolls. When the polylactic acid-based film or sheet according to the present invention is formed by melting the materials typically with a calender film formation machine and allowing the molten materials to pass through space between metal rolls to give a film or sheet, the film or sheet are easily peeled off from the surfaces of metal rolls, and this allows smooth film formation. Each of different acidic-functional-group-modified olefinic polymers (D) may be used alone or in combination.

The acidic functional group in the acidic-functional-group-modified olefinic polymer (D) is typified by carboxyl group and derivative groups therefrom. The derivative groups from carboxyl group are groups chemically derived from carboxyl group and are exemplified by carboxylic acid anhydride groups, ester groups, amide groups, imide groups, and cyano groups. Among them, carboxylic acid anhydride groups are preferred.

An acidic-functional-group-modified olefinic polymer (D) may be obtained by grafting an unmodified olefinic polymer with an unsaturated compound containing the "acidic functional group" (hereinafter also biefly referred to as an "acidic-functional-group-containing unsaturated compound").

The unmodified polyolefinic polymer is exemplified by polyolefins such as high-density polyethylenes, medium-density polyethylenes, low-density polyethylenes, polypropylenes, polybutenes, poly(4-methylpentene-1)s, ethylene/$\alpha$-olefin copolymers, and propylene/$\alpha$-olefin copolymers, as well as oligomers of them; polyolefinic elastomers such as ethylene-propylene rubbers, ethylene-propylene-diene copolymer rubbers, isobutylene-isoprene rubbers, butyl rubbers, butadiene rubbers, low-crystallinity ethylene-propylene copolymers, propylene-butene copolymers, ethylene-vinyl ester copolymers, ethylene-methyl (meth)acrylate copolymers, ethylene-ethyl (meth)acrylate copolymers, ethylene-maleic anhydride copolymers, and blends of polypropylene and an ethylene-propylene rubber; and mixtures of two or more of these. Among them, polypropylenes, propylene/$\alpha$-olefin copolymers, low-density polyethylenes, and oligomers of them are preferred, of which polypropylenes, propylene/$\alpha$-olefin copolymers, and oligomers of them are particularly preferred. The "oligomers" may be typified by those obtained from corresponding polymers through molecular weight reduction by thermal decomposition. Such oligomers are also available by polymerization.

Exemplary acidic-functional-group-containing unsaturated compounds include carboxyl-containing unsaturated compounds, and unsaturated compounds containing a group derived from carboxyl group. The carboxyl-containing unsaturated compounds are exemplified by maleic acid, itaconic acid, chloroitaconic acid, chloromaleic acid, citraconic acid, and (meth)acrylic acid. The unsaturated compounds containing a group derived from carboxyl group are exemplified by unsaturated compounds containing a carboxylic acid anhydride group, such as maleic anhydride, itaconic anhydride, chloroitaconic anhydride, chloromaleic anhydride, and citraconic anhydride; (meth)acrylic esters such as methyl (meth)acrylate, glycidyl (meth)acrylate, and 2-hydroxyethyl (meth)acrylate; and (meth)acrylamide, maleimide, and (meth)acrylonitrile. Among them, carboxyl-containing unsaturated compounds and unsaturated compounds containing a carboxylic anhydride group; and acid-anhydride-group-containing unsaturated compounds are more preferred; and maleic anhydride is particularly preferably.

The acidic-functional-group-modified olefinic polymer (D) may significantly have a weight-average molecular weight of 10000 to 80000, preferably 15000 to 70000, and more preferably 20000 to 60000. An acidic-functional-group-modified olefinic polymer (D) having a weight-average molecular weight of less than 10000 may often cause bleedout after formation of the film or sheet; and an acidic-functional-group-modified olefinic polymer (D) having a weight-average molecular weight of more than 80000 may be separated from the polylactic acid (A) during kneading with rolls. As used herein the term "bleedout" refers to a phenomenon in which a low molecular component exudes to the surface of the film or sheet with elapse of time after the formation of the film or sheet.

The acidic-functional-group-modified olefinic polymer (D) may have an acidic functional group bonded to any position of the olefinic polymer and may have a modification ratio not critical. The acidic-functional-group-modified olefinic polymer (D) may have an acid value of usually 10 to 70 mg KOH/g and preferably 20 to 60 mg KOH/g. An acidic-functional-group-modified olefinic polymer (D) having an acid value of less than 10 mg KOH/g may not effectively help the film or sheet to have better lubricity to rolls; and an acidic-functional-group-modified olefinic polymer (D) having an acid value of more than 70 mg KOH/g may often cause plate out to a roll. As used herein the term "plate out to a roll" refers to adhesion or deposition of a substance to a metal roll surface during melt film formation of the resin composition with the metal roll, in which the substance is exemplified by a component contained in the resin composition, or a product of the component through oxidation, decomposition, chemical combination, or degradation. Also as used herein the term "acid value" refers to one measured according to the neutralization titrimetry specified in JIS K0070-1992.

The acidic-functional-group-modified olefinic polymer (D) may be prepared by allowing an unmodified polyolefinic polymer to react with an acidic-functional-group-containing unsaturated compound in the presence of an organic peroxide. The organic peroxide can be one usually used as an initiator for radical polymerization. The reaction can be performed by any of a solution process and a melting process. In the solution process, a mixture of an unmodified polyolefinic polymer and an acidic-functional-group-containing unsaturated compound is dissolved in an organic solvent, the resulting solution is heated, and thereby yields an acidic-functional-group-modified olefinic polymer (D). The reaction may be performed at a temperature of preferably about 110°C to about 170°C.

In the melting process, a mixture of an unmodified polyolefinic polymer and an acidic-functional-group-containing unsaturated compound is mixed with an organic peroxide, the resulting mixture is reacted by melting and mixing, and thereby yields an acidic-functional-group-modified olefinic polymer (D). The melting and mixing may be performed with any of various mixing machines such as extruders, Brabenders, kneaders, and Banbury mixers. The kneading may be performed at a temperature usually in the range from the melting point of the unmodified polyolefinic polymer to 300°C.

The acidic-functional-group-modified olefinic polymer (D) is preferably a maleic-anhydride-modified polypropylene. The acidic-functional-group-modified olefinic polymer (D) can be a commercial product. The commercial product is exemplified by those available under the trade names "Umex 1010" (maleic anhydride-modified polypropylene, acid value: 52 mg KOH/g, weight-average molecular weight: 32000, modification ratio: 10 percent by weight), "Umex 1001" (maleic anhydride-modified polypropylene, acid value: 26 mg KOH/g, weight-average molecular weight: 49000, modification ratio: 5 percent by weight), and "Umex 2000" (maleic anhydride-containing modified polyethylene, acid value: 30 mg KOH/g, weight-average molecular weight: 20000, modification ratio: 5 percent by weight), each from Sanyo Chemical Industries, Ltd.

The polylactic acid-based film or sheet according to the present invention may contain the acidic-functional-group-modified olefinic polymer (D) in a content of usually, but not limitatively, 0.1 to 10 parts by weight per 100 parts by weight of the polylactic acid (A). The content is preferably 0.1 to 5 parts by weight and particularly preferably 0.3 to 3 parts by weight in order to continue the roll lubricating effect without plate out to a roll and to maintain the biomass ratio at satisfactory level. The acidic-functional-group-modified olefinic polymer (D), if contained in a content of less than 0.1 part by weight, may not effectively improve the roll lubricity; and, if contained in a content of more than 10 parts by weight, may not exhibit effects proportional to the amount and may disadvantageously cause a low biomass ratio.

In an embodiment, a polylactic acid-based film or sheet according to the present invention may further contain one or more additives according to necessity within ranges not adversely affecting advantageous effects of the present invention. The additives are exemplified by antioxidants, ultraviolet absorbers, plasticizers, stabilizers, releasing agents, antistatic agents, colorants (e.g., white pigments), drip inhibitors, flame retardants, hydrolysis inhibitors, blowing agents, and fillers.

The polylactic acid-based film or sheet according to the present invention has a high degree of crystallization and is thereby excellent in solvent resistance. Typically, the polylactic acid-based film or sheet according to the present invention may have a degree of swelling of typically 2.5 or less and preferably 2.0 or less both in ethyl acetate and in toluene. The degree of swelling may be measured by weighing a film or sheet sample (50 mm by 50 mm by 0.05 mm thick); immersing the film or sheet sample in a solvent for 15 minutes; retrieving the film or sheet sample from the solvent; removing the solvent from the surface of the film or sheet sample with a waste rag; weighing the film or sheet sample after immersion; and dividing the weight after immersion by the weight before immersion.

The polylactic acid-based film or sheet according to the present invention can maintain mechanical properties (e.g., rigidity) and elastic properties at high levels. Typically, the polylactic acid-based film or sheet according to the present invention may have an initial elastic modulus of usually 1000 MPa or more and preferably 1500 MPa or more in the machine direction (MD). An upper limit of the initial elastic modulus is generally about 3500 MPa (e.g., about 3000 MPa) in the machine direction (MD). The polylactic acid-based film or sheet according to the present invention has a breaking strength of usually 30 MPa or more and preferably 35 MPa or more in the machine direction (MD). An upper limit of the breaking strength is generally about 150 MPa (e.g., about 120 MPa).

The polylactic acid-based film or sheet according to the present invention has an elongation of usually 2.5% or more and preferably 3.5% or more in the machine direction (MD). An upper limit of the elongation is generally about 15% (e.g., about 12%) in the machine direction (MD). When a soft aliphatic polyester (c) is used as the tear-resistance improver (E), the polylactic acid-based film or sheet may have an elongation of usually 5% or more, preferably 10% or more, and more preferably 20% or more in the machine direction (MD); and an upper limit of the elongation in this case may be generally 150%, preferably 120%, and more preferably 100% in the machine direction (MD).

The initial elastic modulus, breaking strength, and elongation may be measured with a tensile tester according to "Plastics-Determination of tensile properties" specified in JIS K 7161.

Instrument: Tensile tester (Autograph AG-20kNG, supplied by Shimadzu Corporation)
Sample size: 0.05 mm thick by 10 mm wide by 100 mm long (the sample is cut out so that a direction parallel to the lengthwise direction be a machine direction (MD) upon film formation)
Measurement Conditions:

Chuck-to-chuck distance: 50 mm
Tensile speed: 300 mm/min

Though not critical, the polylactic acid-based film or sheet according to the present invention may have a thickness of usually 10 to 500 $\mu$m, preferably 20 to 400 $\mu$m, and more preferably 30 to 300 $\mu$m. The polylactic acid-based film or sheet according to the present invention is widely usable in applications the same as commonly used films or sheets and is advantageously usable typically as substrates (bases) of pressure-sensitive adhesive tapes or sheets; substrates of separators for use in pressure-sensitive adhesive tapes or sheets; and substrates of protective films.

[Production of Polylactic Acid-based Film or Sheet]

A polylactic acid-based film or sheet according to an embodiment of the present invention may be produced by any method not limited, but is preferably produced by forming a film from a resin composition containing a polylactic acid (A) through melt film formation. The melt film formation, when employed, may allow the resulting film or sheet to easily have a melt endotherm $\Delta$Hc' of 10 J/g or more of a region crystallized upon film formation.

Typically, the polylactic acid-based film or sheet according to the present invention may be produced by uniformly dispersing respective components to give a resin composition containing a polylactic acid (A); forming a film from the resin composition by an extrusion process (e.g., T-die process or tubular film process (inflation process)), or by calendering or polishing; and cooling and solidifying the film. The preparation of the resin composition may be performed with a continuous melt kneader such as twin-screw extruder; or a batch melt kneader such as press kneader, Banbury mixer, or roll kneader. The melt film formation is preferably a technique of passing the melted resin composition through a space between two metal rolls to form a film having a desired thickness, and is particularly preferably calendering or polishing.

When a film is formed from the resin composition containing a polylactic acid (A) through melt film formation, a temperature of the resin composition upon melt film formation (hereinafter also referred to as a "resin temperature upon melt film formation") is not critical, but is preferably a temperature in the range from a temperature 15°C higher than a crystallization temperature (Tc) of the resin composition in a temperature drop process and a temperature 5°C lower than a melting temperature (Tm) of the resin composition in a temperature rise process. The melt film formation, when performed at a temperature in this range, may promote the crystallization of the polylactic acid (A) and may allow the film or sheet according to the present invention to readily have satisfactory thermal stability.

For example, when the resin composition is melted to form a film by calendering, a temperature of the resin composition upon calender rolling (corresponding to the resin temperature upon melt film formation) may be set to a temperature in the range from a temperature 15°C higher than a crystallization temperature (Tc) of the resin composition in a temperature drop process and a temperature 5°C lower than a melting temperature (Tm) of the resin composition in a temperature rise process. Such rolling at a temperature lower than the melting point may promote orientation-induced crystallization. The tetrafluoroethylene polymer (B'), when contained in the resin composition, may significantly further effectively promote the orientation-induced crystallization. This is probably because the tetrafluoroethylene polymer (B') is fibrillated to form a network in the resin composition, exhibits effects as a crystal nucleating agent, and thereby synergistically promotes the orientation-induced crystallization. Thus, rolling in the temperature range allows the film or sheet according to the present invention to have a smooth surface condition and good thermal stability due to effectively promoted orientation-induced crystallization.

The production of the polylactic acid-based film or sheet according to the present invention may further include the step of controlling the temperature conditions after melt film formation so as to allow the tetrafluoroethylene polymer (B') to promote crystallization further effectively. Specifically, a molten film formed from the resin composition may be cooled and solidified after the step of promoting crystallization, by holding the molten film at a temperature in the range from a temperature 25°C lower than a crystallization temperature (Tc) of the resin composition in a temperature drop process to a temperature 10°C higher than the crystallization temperature (Tc) (this step is hereinafter also simply referred to as a "crystallization promoting step"). Specifically, the crystallization promoting step is the step of subjecting a molten film formed from the resin composition to a condition where the temperature is controlled within the range from a temperature 25°C lower than a crystallization temperature (Tc) of the resin composition in a temperature drop process to a temperature 10°C higher than the crystallization temperature (Tc). This step allows promotion of crystallization of the resin composition while maintaining the smooth surface condition after the melt film formation. Examples of such a temperature control method include, but are not limited to, a method of bringing the molten film formed from the resin composition into direct contact typiacaly with a roll or belt which can be heated to a predetermined temperature.

The molten film formed from the resin composition is preferably brought into contact with metal rolls at a predetermined surface temperature particularly from the viewpoint of controlling the temperature of the molten film always to a predetermined temperature. For this reason, the resin composition containing a polylactic acid (A) is desirably controlled to have such a composition as to be easily peelable from the metal rolls, and the acidic-functional-group-modified olefinic polymer (D) is preferably added also from this view point.

The crystallization promoting step is preferably performed for a durration as long as possible and for a duration of usually 2 to 10 seconds and preferably 3 to 8 seconds, although the duration may vary ultimately depending on the degree of crystallization of the resin composition and is not determined unconditionally.

An optimum temperature condition for the crystallization promoting step can be always obtained even when, for example, another crystal nucleating agent is added and the resulting resin composition has a different crystallization temperature (Tc) in a temperature drop process. This can be achieved by previously performing a measurement with a differential scanning calorimeter (DSC) to grasp a highest temperature of an exothermic peak associated with crystallization in a temperature drop process. In this process, dimensional changes of the film or sheet obtained by heating to the temperature have to be considered very little, but the temperature is preferably such a temperature that the resulting film or sheet has a thermal deformation rate of 40% or less.

The polylactic acid-based film or sheet according to the present invention is preferably produced by the following method. The method includes the step of forming a film from a resin composition containing a polylactic acid (A) through melt film formation. In this method, the resin composition upon melt film formation has a temperature (resin temperature upon melt film formation) in the range from a temperature 15°C higher than a crystallization temperature (Tc) of the resin composition in a temperature drop process to a temperature 5°C lower than a melting temperature (Tm) of the resin composition in a temperature rise process; and/or a molten film formed from the resin composition is cooled and solidified after the step of promoting crystallization at a temperature in the range from a temperature 25°C lower than a crystallization temperature (Tc) of the resin composition in a temperature drop process to a temperature 10°C higher than the crystallization temperature (Tc).

In the method for producing the polylactic acid-based film or sheet including the crystallization promoting step, the resin composition is promotionally crystallized in the crystallization promoting step and then cooled and solidified. The resulting film or sheet is thereby resistant to extreme thermal shirinkage upon use because internal stress hardly remains therein. The highly crystallized film or sheet according to an embodiment of the present invention formed by the production method can keep its shape up to a temperature around the melting point of the polylactic acid and is thereby sufficiently usable even for such applications requiring thermal stability that customary equivalents are not applicable. The production method has large advantages in economy and productivity because it does not require inefficient steps of cooling and solidifying and then heating again. The method may further include the step of monoaxially or biaxially stretching (preferably biaxially stretching) the resulting film before and/or after the crystallization promoting step. Such stretching may further enhance or promote the crystallization. The stretching may be performed at a temperature typically of 60°C to 100°C.

The method for producing the polylactic acid-based film or sheet including the crystallization promoting step is desirably continuously performed from the melt film formation step through the crystallization promoting step to the cooling solidification step from the viewpoint of productivity. This is because such a system shortens the process time. Such a method is exemplified by methods typically using a calendering film formation machine or a polishing film formation machine.

[Calendering Film Formation]

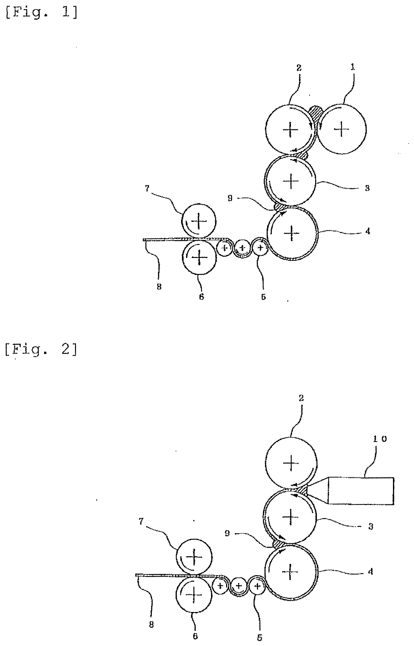

Fig. 1 depicts a schematic view of a calendering film formation machine for use in the production method as an embodiment. Fig. 1 will be described in detail below.

The molten resin composition is rolled between four calender rolls, i.e., a first roll 1, a second roll 2, a third roll 3, and a fourth roll 4, to have a smaller thickness gradually. The rolling is adjusted so that the resin composition will have a desired thickness after the resin composition is finally passed through between the third roll 3 and the fourth roll 4. In the calendering film formation, film formation from the resin composition from the first to fourth rolls 1 to 4 corresponds to the "melt film formation step." Take-off rolls 5 have preset temperatures in the range from a temperature 25°C lower than a crystallization temperature (Tc) of the resin composition in a temperature drop process to a temperature 10°C higher than the crystallization temperature (Tc). The take-off rolls 5 act as a group of rolls with which a molten film formed from the resin composition 8 is initially brought into contact. The take-off rolls 5 include a group of one or more (three in the embodiment illustrated in Fig. 1) rolls and acts to remove the molten resin composition 8 from the fourth roll 4. When the take-off rolls 5 include two or more rolls as above, and temperatures of the rolls can be controlled, the respective rolls preferably have identical temperatures but may have different temperatures within a desired temperature range. A larger number of the take-off rolls 5 increases the time for isothermal crystallization and has an advantage in the promotion of crystallization. In the calendering film formation, the step of passing the resin composition 8 through between take-off rolls 5 corresponds to the "crystallization promoting step" because the take-off rolls 5 promote the crystallization of the molten film formed from the resin composition 8.

Two cooling rolls 6 and 7 cool and solidify the resin composition 8 by passing the resin composition 8 through between them and form the surface of the resin composition into a desired shape. Thus, usually, one roll (for example, the cooling roll 6) is a metal roll that has a surface designed for imparting a surface shape to the resin composition 8, and the other roll (for example, the cooling roll 7) is a rubber roll. Each arrow in the figure means a rotation direction of a corresponding roll. The reference sign 9 stands for a bank (resin pool).

[Polishing Film Formation]

Fig. 2 depicts a schematic view of a polishing film formation machine for use in the production method as another embodiment. Fig. 2 will be described in detail below.

An extruder head 10 of an extruder (not shown) is arranged between a heated second roll 2 and a heated third roll 3, from which a molten resin composition 8 is continuously extruded into between the second roll 2 and the third roll 3 at a predetermined extrusion speed. The extruded resin composition 8 is rolled between the second roll 2 and the third roll 3 to have a smaller thickness. The rolling is adjusted so that the resin composition will have a desired thickness after the resin composition is finally passed through between the third roll 3 and the fourth roll 4. In the polishing film formation, the film formation from the resin composition 8 from the second roll 2 to the fourth roll 4 corresponds to the "melt film formation step." The resin composition 8 is then passed through three take-off rolls 5, finally passed through cooling rolls 6 and 7, and thereby yields a solidified film or sheet. The take-off rolls 5 have temperatures controlled in the range from a temperature 25°C lower than a crystallization temperature (Tc) of the resin composition 8 in a temperature drop process to a temperature 10°C higher than the crystallization temperature (Tc). In the polishing film formation, the step of passing the resin composition through the take-off rolls 5 corresponds to the "crystallization promoting step."

Films or sheets according to embodiments of the present invention are widely usable for applications as in common films or sheets as described above, and are particularly advantageously usable as substrates of separators (release liners), substrates of pressure-sensitive adhesive sheets or tapes, and substrates of protective films or sheets.

[Separator]

A separator according to an embodiment of the present invention includes a separator substrate; and a release-agent-treated layer present on or above at least one side of the separator substrate, in which the separator substrate is composed of the polylactic acid-based film or sheet.

A release agent (releasing agent) used to form the release-agent-treated layer is exemplified by, but not limited to, silicone release agents, fluorine release agents, long-chain alkyl release agents, and polyolefinic release agents. Each of different release agents may be used alone or in combination.

The release agent is not limited, as long as it can form a layer (coat) on the separator substrate, and as long as the layer does not adversely affect a pressure-sensitive adhesive while exhibiting suitable peelability according to the intended use. The release agent, however, is preferably one capable of forming a layer having a peel force of about 0 to about 25 N/50 mm (preferably about 0.1 to about 10 N/50 mm) with respect to an adhesive face, from the viewpoint of exhibiting satisfactory peelability from the adhesive face typically of a pressure-sensitive adhesive tape or sheet.

Of such release agents, silicone release agents are preferred typically for their satisfactory peelability (peeling performance). The silicone release agents are represented by, but not limited to, addition-curable thermosetting silicone release agents (addition-curable thermosetting polysiloxane release agents).

The addition-curable thermosetting silicone release agents include, as essential components, a polyorganosiloxane containing an alkenyl group as a functional group in the molecule (alkenyl-containing silicone); and a polyorganosiloxane containing a hydrosilyl group as a functional group in the molecule.

Of such polyorganosiloxanes containing an alkenyl group as a functional group in the molecule, preferred are polyorganosiloxanes having two or more alkenyl groups per molecule. The alkenyl group is exemplified by vinyl group (ethenyl group), allyl group (2-propenyl group), butenyl group, pentenyl group, and hexenyl group. The alkenyl group is usually bonded to a silicon atom (e.g., a terminal silicon atom or a silicone atom in the principal chain) of a polyorganosiloxane forming a principal chain or skeleton.

The polyorganosiloxane forming the principal chain or skeleton is exemplified by polyalkylalkylsiloxanes (polydialkylsiloxanes) such as polydimethylsiloxanes, polydiethylsiloxanes, and polymethylethylsiloxanes; polyalkylarylsiloxanes; and copolymers each derived from two or more different silicon-containing monomer components [e.g., poly(dimethylsiloxane-diethylsiloxane)s]. Among them, polydimethylsiloxanes are preferred. Specifically, preferred examples of the polyorganosiloxane containing an alkenyl group as a functional group in the molecule include polydimethylsiloxanes having, for example, vinyl group and/or hexenyl group as a functional group.

The polyorganosiloxane crosslinking agent containing a hydrosilyl group as a functional group in the molecule is a polyorganosiloxane having a hydrogen atom bonded to a silicon atom (particularly a silicon atom having a Si-H bond) in the molecule. Among such polyorganosiloxanes, preferred are polyorganosiloxanes each containing two or more silicon atoms having a Si-H bond per molecule. The silicon atoms having a Si-H bond may each be either of a silicone atom in the principal chain and a silicon atom in the side chain. Namely, the silicon atoms having a Si-H bond may be contained as a constitutional unit of the principal chain or a constitutional unit of the side chain. The number of silicon atoms having a Si-H bond is not limited, as long as being two or more. Preferred examples of the polyorganosiloxane crosslinking agent containing a hydrosilyl group as a functional group in the molecule include polymethylhydrogensiloxanes and poly(dimethylsiloxane-methylhydrogensiloxane)s.

The release agent for use herein may be used in combination with a reaction inhibitor for imparting storage stability at room temperature to the release agent. For example, when an addition-curable thermosetting silicone release agent is used as the release agent, the reaction inhibitor for use therewith is exemplified by 3,5-dimethyl-1-hexyn-3-ol, 3-methyl-1-penten-3-ol, 3-methyl-3-penten-1-yne, and 3,5-dimethyl-3-hexen-1-yne.

Where necessary, the release agent may further include another component such as a release controlling agent, in addition to the above-mentioned components. Specifically, when an addition-curable thermosetting silicone release agent is used as the release agent, the release agent may be combined with any of release controlling agents such as MQ resins; and polyorganosiloxanes containing neither alkenyl group nor hydrosilyl group (e.g., trimethylsiloxy-endcapped polydimethylsiloxanes). The addition-curable thermosetting silicone release agent may contain these components in a content of preferably, but not limitatively, 1 to 30 percent by weight.

The release agent may further include one or more additives according to necessity. Examples of such optional additives include fillers, antistatic agents, antioxidants, ultraviolet absorbers, plasticizers, and colorants (e.g., dyestuffs and pigments).

The release-agent-treated layer may be formed by a known or customary method, such as a method of applying a release agent composition containing a release agent to a separator substrate (or to an intermediate layer when the intermediate layer is present on the separator substrate). The application (coating) can be performed typically with a device generally used for the formation of a release-agent-treated layer, such as coater, extruder, or printer.

The release-agent-treated layer may have a thickness of typically about 0.02 to about 1 μm, preferably about 0.05 to about 0.7 μm, and more preferably about 0.1 to about 0.5 μm, whereas the thickness can be suitably selected according typically to the intended use.

Where necessary, a separator according to an embodiment of the present invention may further include another layer (intermediate layer) between the separator substrate and the release-agent-treated layer.

[Pressure-sensitive Adhesive Tape or Sheet]

A pressure-sensitive adhesive tape or sheet according to an embodiment of the present invention includes a substrate; and a pressure-sensitive adhesive layer present on or above at least one side of the substrate, in which the substrate is composed of the polylactic acid-based film or sheet.

The substrate herein may have undergone a customary surface treatment according to necessity for better adhesion with an adjacent layer. The surface treatment is exemplified by chromate treatment, exposure to ozone, exposure to flame, exposure to a high-voltage electric shock, treatment with ionizing radiation, and other chemical or physical oxidation treatments.

A pressure-sensitive adhesive constituting the pressure-sensitive adhesive layer is exemplified by, but not limited to, known pressure-sensitive adhesives such as rubber pressure-sensitive adhesives, acrylic pressure-sensitive adhesives, vinyl alkyl ether pressure-sensitive adhesives, silicone pressure-sensitive adhesives, polyester pressure-sensitive adhesives, polyamide pressure-sensitive adhesives, urethane pressure-sensitive adhesives, styrene-diene block copolymer pressure-sensitive adhesives, and pressure-sensitive adhesives with improved creep properties and corresponding to these pressure-sensitive adhesives, except with a hot-melt resin having a melting point of about 200°C or lower incorporated thereto. Each of different pressure-sensitive adhesives may be used alone or in combination. The pressure-sensitive adhesives may be pressure-sensitive adhesives of any type, such as solvent-borne, emulsion, hot melt, energy-ray-curable, and heat-peelable pressure-sensitive adhesives.

Exemplary pressure-sensitive adhesives generally used herein include rubber pressure-sensitive adhesives including a natural rubber or a synthetic rubber as a base polymer; and acrylic pressure-sensitive adhesives including an acrylic polymer (homopolymer or copolymer) as a base polymer, which acrylic polymer employs at least one (meth)acrylic alkyl ester as a monomer component. Among them, an acrylic pressure-sensitive adhesive including an acrylic polymer as a base polymer is particularly preferably used in the present invention.

The (meth)acrylic alkyl ester for use as a monomer component of the acrylic polymer is exemplified by (meth)acrylic $C_{1-20}$ alkyl esters such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, hexyl (meth)acrylate, heptyl (meth)acrylate, octyl (meth)acrylate, 2-ethylhexyl (meth)acrylate, isooctyl (meth)acrylate, isodecyl (meth)acrylate, dodecyl (meth)acrylate, tridecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate.

For improvements typically in cohesive force, thermal stability, and crosslinking properties, the acrylic polymer may further include a unit corresponding to another monomer component copolymerizable with the (meth)acrylic alkyl ester. Such a monomer component is exemplified by (meth)acrylic esters having an aliphatic cyclic skeleton, such as cyclopentyl (meth)acrylate, cyclohexyl (meth)acrylate, cyclohexylmethyl (meth)acrylate, and bornyl (meth)acrylate; (meth)acrylic esters having an aromatic carbocycle, such as phenyl (meth)acrylate and benzyl (meth)acrylate; carboxyl-containing monomers such as acrylic acid, methacrylic acid, carboxyethyl acrylate, carboxypentyl acrylate, itaconic acid, maleic acid, fumaric acid, and crotonic acid; anhydride-containing monomers such as maleic anhydride and itaconic anhydride; hydroxyl-containing monomers such as hydroxyethyl (meth)acrylate, hydroxypropyl (meth)acrylate, hydroxybutyl (meth)acrylate, hydroxyhexyl (meth)acrylate, hydroxyoctyl (meth)acrylate, hydroxydecyl (meth)acrylate, hydroxylauryl (meth)acrylate, and (4-hydroxymethylcyclohexyl)methyl methacrylate; sulfo-containing monomers such as styrenesulfonic acid, allylsulfonic acid, 2-(meth)acrylamido-2-methylpropanesulfonic acid, (meth)acrylamidopropanesulfonic acid, sulfopropyl (meth)acrylate, and (meth)acryloyloxynaphthalenesulfonic acid; (N-substituted) amido-containing monomers such as (meth)acrylamide, N,N-dimethyl(meth)acrylamide, N-butyl(meth)acrylamide, N-methylol(meth)acrylamide, and N-methylolpropane(meth)acrylamide; aminoalkyl (meth)acrylate monomers such as aminoethyl (meth)acrylate, N,N-dimethylaminoethyl (meth)acrylate, and t-butylaminoethyl (meth)acrylate; alkoxyalkyl (meth)acrylate monomers such as methoxyethyl (meth)acrylate and ethoxyethyl (meth)acrylate; maleimide monomers such as N-cyclohexylmaleimide, N-isopropylmaleimide, N-laurylmaleimide, and N-phenylmaleimide; itaconimide monomers such as N-methylitaconimide, N-ethylitaconimide, N-butylitaconimide, N-octylitaconimide, N-2-ethylhexylitaconimide, N-cyclohexylitaconimide, and N-laurylitaconimide; succinimide monomers such as N-(meth)acryloyloxymethylenesuccinimide, N-(meth)acryloyl-6-oxyhexamethylenesuccinimide, and N-(meth)acryloyl-8-oxyoctamethylenesuccinimide; vinyl monomers such as vinyl acetate, vinyl propionate, N-vinylpyrrolidone, methylvinylpyrrolidone, vinylpyridine, vinylpiperidone, vinylpyrimidine, vinylpiperazine, vinylpyrazine, vinylpyrrole, vinylimidazole, vinyloxazole, vinylmorpholine, N-vinylcarboxamides, styrene, α-methylstyrene, and N-vinylcaprolactam; cyano-containing monomers such as acrylonitrile and methacrylonitrile; epoxy-containing acrylic monomers such as glycidyl (meth)acrylate; glycol acrylic ester monomers such as polyethylene glycol (meth)acrylates, polypropylene glycol (meth)acrylates, methoxyethylene glycol (meth)acrylate, and methoxypolypropylene glycol (meth)acrylate; acrylic ester monomers typically having a heterocycle, a halogen atom, or a silicon atom, such as N-(meth)acryloylmorpholine, tetrahydrofurfuryl (meth)acrylate, fluorinated (meth)acrylates, and silicone (meth)acrylates; multifunctional monomers such as hexanediol di(meth)acrylate, (poly)ethylene glycol di(meth)acrylate, (poly)propylene glycol di(meth)acrylate, neopentyl glycol di(meth)acrylate, pentaerythritol di(meth)acrylate, trimethylolpropane tri(meth)acrylate, pentaerythritol tri(meth)acrylate, dipentaerythritol hexa(meth)acrylate, epoxy acrylates, polyester acrylates, and urethane acrylates; olefinic monomers such as isoprene, butadiene, and isobutylene; and vinyl ether monomers such as vinyl ether. Each of different monomer components may be used alone or in combination.

The acrylic polymer may be produced by a known radical polymerization technique such as solution polymerization, bulk polymerization, or emulsion polymerization. The acrylic polymer may be of any type such as a random copolymer, a block copolymer, or a graft polymer. The polymerization may employ any of polymerization initiators and chain-transfer agents generally used.

The base polymer constituting the pressure-sensitive adhesive may have a weight-average molecular weight of typically $1 \times 10^4$ to $200 \times 10^4$ and preferably $30 \times 10^4$ to $150 \times 10^4$. A base polymer having an excessively low weight-average molecular weight may often cause adhesive residue or another contamination to an adherend typically when the tape or sheet is peeled by heating, although the tape or sheet excels in conformability to the adherend. In contrast, a base polymer having an excessively high weight-average molecular weight may cause the tape or sheet to have insufficient comforambility to the adherend.

The pressure-sensitive adhesive may further include one or more suitable additives according to necessity. The additives are exemplified by crosslinking agents (e.g., epoxy crosslinking agents, isocyanate crosslinking agents, melamine crosslinking agents, oxazoline crosslinking agents, aziridine crosslinking agents, and metal chelate compounds), crosslinking promoters (crosslinking catalysts), tackifiers (e.g., rosin derivative resins, polyterpene resins, petroleum resins, and oil-soluble phenolic resins), thickeners, plasticizers, fillers, blowing agents, age inhibitors, antioxidants, ultraviolet absorbers, antistatic agents, surfactants, leveling agents, colorants, flame retardants, and silane coupling agents.

The pressure-sensitive adhesive layer may be formed by a known or customary method. The method is exemplified by a method of applying a pressure-sensitive adhesive composition to a substrate (or to an intermediate layer when the intermediate layer is present on the substrate); and a method of applying a pressure-sensitive adhesive composition to a suitable separator to form a pressure-sensitive adhesive layer on the separator, and transferring the pressure-sensitive adhesive layer to a substrate (or to an intermediate layer when the intermediate layer is present on the substrate). The application (coating) can be performed with a device generally used for the formation of a pressure-sensitive adhesive layer, such as coater, extruder, or printer.

The pressure-sensitive adhesive layer may have a thickness of typically about 5 to about 3000 μm and preferably about 10 to about 500 μm, although the thickness can be suitably selected according typically to the intended use.

The pressure-sensitive adhesive layer may have an adhesive strength at 25°C of typically 3.0 N/20 mm or more, preferably 5.0 N/20 mm or more, and more preferably 7.0 N/20 mm or more, while the adhesive strength can be suitably selected according typically to the intended use (e.g., weak tack type or strong tack type). The pressure-sensitive adhesive layer, when of a strong tack type, has an adhesive strength of more preferably 10.0 N/20 mm or more. The adhesive strength is a 180-degree peel strength, as determined with respect to a poly(ethylene terephthalate) film at a tensile speed of 300 mm/min

The pressure-sensitive adhesive tape or sheet according to the present invention may further include, where necessary, another layer between the substrate and the pressure-sensitive adhesive layer. The other layer is an intermediate layer such as an elastic layer or rigid layer. A separator may be provided on the pressure-sensitive adhesive layer before the use of the pressure-sensitive adhesive tape or sheet. The separator protects the pressure-sensitive adhesive layer.

[Protective Film]

A protective film according to an embodiment of the present invention includes a substrate; and a removable pressure-sensitive adhesive layer present on or above at least one side of the substrate, in which the substrate is composed of the polylactic acid-based film or sheet.

The surface of the substrate herein may have undergone a customary surface treatment according to necessity for better adhesion with an adjacent layer. The surface treatment is exemplified by chromate treatment, exposure to ozone, exposure to flame, exposure to a high-voltage electric shock, treatment with ionizing radiation, and other chemical or physical oxidation treatments.

A pressure-sensitive adhesive constituting the removable pressure-sensitive adhesive layer is exemplified by, but not limited to, known pressure-sensitive adhesives such as rubber pressure-sensitive adhesives, acrylic pressure-sensitive adhesives, vinyl alkyl ether pressure-sensitive adhesives, silicone pressure-sensitive adhesives, polyester pressure-sensitive adhesives, polyamide pressure-sensitive adhesives, urethane pressure-sensitive adhesives, styrene-diene block copolymer pressure-sensitive adhesives, and pressure-sensitive adhesives having improved creep properties and corresponding to these pressure-sensitive adhesives, except with a hot-melt resin having a melting point of about 200°C or lower incorporated thereto. Each of different pressure-sensitive adhesives may be used alone or in combination. These pressure-sensitive adhesives may be of any type, such as solvent-borne, emulsion, hot-melt, and other known removable pressure-sensitive adhesives, as long as having removability (peelability).

Exemplary removable pressure-sensitive adhesives generally used include rubber pressure-sensitive adhesives including a natural rubber or a synthetic rubber as a base polymer; and acrylic pressure-sensitive adhesives including an acrylic polymer (homopolymer or copolymer) as a base polymer, which acrylic polymer employs at least one (meth)acrylic alkyl ester as a monomer component. Among them, an acrylic pressure-sensitive adhesive including an acrylic polymer as a base polymer is particularly preferably used in the present invention.

The (meth)acrylic alkyl ester used as a monomer component of the acrylic polymer is exemplified by (meth)acrylic $C_{1-20}$ alkyl esters such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, hexyl (meth)acrylate, heptyl (meth)acrylate, octyl (meth)acrylate, 2-ethylhexyl (meth)acrylate, isooctyl (meth)acrylate, isodecyl (meth)acrylate, dodecyl (meth)acrylate, tridecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate.

The acrylic polymer may further include a unit corresponding to another monomer component copolymerizable with the (meth)acrylic alkyl ester, where necessary for better properties such as cohesive force, thermal stability, and crosslinking properties. Such a monomer component is exemplified by (meth)acrylic esters having an aliphatic cyclic skeleton, such as cyclopentyl (meth)acrylate, cyclohexyl (meth)acrylate, cyclohexylmethyl (meth)acrylate, and bornyl (meth)acrylate; (meth)acrylic esters having an aromatic carbocycle, such as phenyl (meth)acrylate and benzyl (meth)acrylate; carboxyl-containing monomers such as acrylic acid, methacrylic acid, carboxyethyl acrylate, carboxypentyl acrylate, itaconic acid, maleic acid, fumaric acid, and crotonic acid; anhydride-containing monomers such as maleic anhydride and itaconic anhydride; hydroxyl-containing monomers such as hydroxyethyl (meth)acrylate, hydroxypropyl (meth)acrylate, hydroxybutyl (meth)acrylate, hydroxyhexyl (meth)acrylate, hydroxyoctyl (meth)acrylate, hydroxydecyl (meth)acrylate, hydroxylauryl (meth)acrylate, and (4-hydroxymethylcyclohexyl)methyl methacrylate; sulfo-containing monomers such as styrenesulfonic acid, allylsulfonic acid, 2-(meth)acrylamido-2-methylpropanesulfonic acid, (meth)acrylamidopropanesulfonic acid, sulfopropyl (meth)acrylate, and (meth)acryloyloxynaphthalenesulfonic acid; (N-substituted) amido-containing monomers such as (meth)acrylamide, N,N-dimethyl(meth)acrylamide, N-butyl(meth)acrylamide, N-methylol(meth)acrylamide, and N-methylolpropane(meth)acrylamide; aminoalkyl (meth)acrylate monomers such as aminoethyl (meth)acrylate, N,N-dimethylaminoethyl (meth)acrylate, and t-butylaminoethyl (meth)acrylate; alkoxyalkyl (meth)acrylate monomers such as methoxyethyl (meth)acrylate and ethoxyethyl (meth)acrylate; maleimide monomers such as N-cyclohexylmaleimide, N-isopropylmaleimide, N-laurylmaleimide, and N-phenylmaleimide; itaconimide monomers such as N-methylitaconimide, N-ethylitaconimide, N-butylitaconimide, N-octylitaconimide, N-2-ethylhexylitaconimide, N-cyclohexylitaconimide, and N-laurylitaconimide; succinimide monomers such as N-(meth)acryloyloxymethylenesuccinimide, N-(meth)acryloyl-6-oxyhexamethylenesuccinimide, and N-(meth)acryloyl-8-oxyoctamethylenesuccinimide; vinyl monomers such as vinyl acetate, vinyl propionate, N-vinylpyrrolidone, methylvinylpyrrolidone, vinylpyridine, vinylpiperidone, vinylpyrimidine, vinylpiperazine, vinylpyrazine, vinylpyrrole, vinylimidazole, vinyloxazole, vinylmorpholine, N-vinylcarboxamides, styrene, α-methylstyrene, and N-vinylcaprolactam; cyano-containing monomers such as acrylonitrile and methacrylonitrile; epoxy-containing acrylic monomers such as glycidyl (meth)acrylate; glycol acrylic ester monomers such as polyethylene glycol (meth)acrylates, polypropylene glycol (meth)acrylates, methoxyethylene glycol (meth)acrylate, and methoxypolypropylene glycol (meth)acrylate; acrylic ester monomers having, for example, a heterocycle, a halogen atom, or a silicon atom, such as N-(meth)acryloylmorpholine, tetrahydrofurfuryl (meth)acrylate, fluorinated (meth)acrylates, and silicone (meth)acrylate; multifunctional monomers such as hexanediol di(meth)acrylate, (poly)ethylene glycol di(meth)acrylate, (poly)propylene glycol di(meth)acrylate, neopentyl glycol di(meth)acrylate, pentaerythritol di(meth)acrylate, trimethylolpropane tri(meth)acrylate, pentaerythritol tri(meth)acrylate, dipentaerythritol hexa(meth)acrylate, epoxy acrylates, polyester acrylates, and urethane acrylates; olefinic monomers such as isoprene, butadiene, and isobutylene; and vinyl ether monomers such as vinyl ether. Each of different monomer components may be used alone or in combination.

The acrylic polymer may be produced typically by a known radical polymerization technique such as solution polymerization, bulk polymerization, or emulsion polymerization. The acrylic polymer may be of any type, such as a random copolymer, block copolymer, or graft polymer. The polymerization may employ any of generally used polymerization initiators and chain-transfer agents.

The base polymer constituting the pressure-sensitive adhesive may have a weight-average molecular weight of typically $1 \times 10^4$ to $500 \times 10^4$ and preferably $2 \times 10^4$ to $100 \times 10^4$. A base polymer having an excessively low weight-average molecular weight may be liable to cause contamination such as adhesive residue to an adherend after removal of the protective film, although the protective film has satisfactory conformability to the adherend. In contrast, a base polymer having an excessively high weight-average molecular weight may often cause the protective film to have insufficient conformability to an adherend, although the protective film may less cause contamination such as adhesive residue to the adherend after removal of the protective film.

The pressure-sensitive adhesive may further include one or more suitable additives according to necessity, in addition to the base polymer. The additives are exemplified by crosslinking agents (e.g., epoxy crosslinking agents, isocyanate crosslinking agents, melamine crosslinking agents, oxazoline crosslinking agents, aziridine crosslinking agents, and metal chelate compounds), crosslinking promoters (crosslinking catalysts), tackifiers (e.g., rosin derivative resins, polyterpene resins, petroleum resins, and oil-soluble phenolic resins), thickeners, plasticizers, fillers, blowing agents, age inhibitors, antioxidants, ultraviolet absorbers, antistatic agents, surfactants, leveling agents, colorants, flame retardants, and silane coupling agents. In particular, the pressure-sensitive adhesive preferably further includes a crosslinking agent for imparting removability to the pressure-sensitive adhesive.

The removable pressure-sensitive adhesive layer may be formed by a known or customary method. The method is exemplified by a method of applying a pressure-sensitive adhesive composition to the substrate (or to an intermediate layer when the intermediate layer is present on the substrate); and a method of applying a pressure-sensitive adhesive composition to a suitable separator to form a pressure-sensitive adhesive layer and transferring the pressure-sensitive adhesive layer to the substrate (or to an intermediate layer when the intermediate layer is present on the substrate). The application (coating) can be performed with a device generally used for the formation of a pressure-sensitive adhesive layer, such as coater, extruder, or printer.

The removable pressure-sensitive adhesive layer may have a thickness of typically about 1 to about 100 $\mu$m and preferably about 1 to about 50 $\mu$m, while the thickness can be suitably selected according typically to the intended use.

The removable pressure-sensitive adhesive layer may have any adhesive strength at 25°C as long as within such a range that the protective film can be removed (peeled) and may have an adhesive strength of typically less than 3 N/20 mm. The lower limit of the adhesive strength is typically about 0.01 N/20 mm. The adhesive strength is a 180-degree peel strength as determined with respect to a poly(ethylene terephthalate) film at a tensile speed of 300 mm/min.

In an embodiment of the present invention, the protective film may further include, where necessary, another layer (intermediate layer) between the substrate and the removable pressure-sensitive adhesive layer. In another embodiment, a separator may be provided on the removable pressure-sensitive adhesive layer before use of the protective film so as to protect the removable pressure-sensitive adhesive layer.

EXAMPLES

The present invention will be illustrated in further detail with reference to several examples and comparative examples below, which are by no means intended to limit the scope of the present invention. Evaluations in the examples and comparative examples were performed in the following manner.

Following materials were used in the examples and comparative examples.

<Polylactic Acid (A)>

A1: Product under the trade name "TERRAMAC TP-4000" (supplied by UNITIKA LTD.)

<Fluoropolymer (B)>

B1: Acrylic-modified polytetrafluoroethylene (the trade name "METABLEN A-3000" supplied by Mitsubishi Rayon Co., Ltd.)

<Crystallization Promoter (C)>

C1: Zinc phenylphosphonate (the trade name "ECOPROMOTE" supplied by Nissan Chemical Industries, Ltd.)

<Acidic-functional-group-modified Olefinic Polymer (D)>

D1: Maleic-anhydride-containing modified polypropylene (having a weight-average molecular weight of 32000 and an acid value of 52 mg KOH/g, the trade name "Umex 1010" supplied by Sanyo Chemical Industries, Ltd.)

<Tear-resistance Improver (E)>

E1: Polyglycerol fatty acid ester (having a number-average molecular weight Mn of 1000, the trade name "CHIRABASOL VR-10" supplied by Taiyo Kagaku Corporation)
E2: Polyglycerol fatty acid ester (having a number-average molecular weight Mn of 1700, the trade name "CHIRABASOL VR-2" supplied by Taiyo Kagaku Corporation)
E3: Core-shell structure polymer (acrylic rubber/poly(methyl methacrylate)-styrene core-shell structured polymer, the trade name "PARALOID EXL2315" supplied by Rohm and Haas Japan K.K.)
E4: Soft aliphatic polyester (poly(butylene adipate-co-terephthalate), the trade name "Ecoflex" supplied by BASF Japan Ltd.)

EXAMPLE I-1

A resin composition was prepared in a blending ratio given in Table 1 below. The resin composition was melted and kneaded with a Banbury mixer, and then subjected to calendering film formation using a four-roll reverse L calendering line so as to form a molten film having a thickness of 50 $\mu$m (melt film formation step). Next, the molten film formed from the resin composition was allowed to pass through three rolls (take-off rolls) so that the upper side and the lower side of the film alternately came in contact with the rolls to promote crystallization (crystallization promoting step). The three rolls could be heated to any temperature and were arranged immediately downstream from the melt film formation step as illustrated in Fig. 1. The resin composition as the molten film was then solidified by passing through between cooling rolls and yielded a film. The surface temperature of the roll corresponding to the fourth roll 4 in Fig. 1 was regarded as the temperature of the resin composition in the melt film formation step (resin temperature upon melt film formation). The temperature of the resin composition in the crystallization promoting step was controlled such that the surface temperatures of the three take-off rolls 5 in Fig. 1 were adjusted to be a substantially identical temperature, and this temperature was regarded as the crystallization promoting temperature. The film formation was performed at a speed of 5 m/min, and the crystallization promoting step was substantially performed for a duration (take-off roll transit time) of about 5 seconds.

EXAMPLES I-2 to I-5

Resin compositions were prepared in blending ratios given in Table 1, from which films of Examples I-2 to I-5 were prepared by the procedure of Example I-1.

COMPARATIVE EXAMPLE I-1

A resin composition was prepared in a blending ratio given in Table 1, from which a film of Comparative Example I-1 was prepared by the procedure of Example I-1.

Properties of the films obtained in the examples and comparative example were measured and evaluated by methods as follows.

<Melting Temperature (°C)>

An endothermic peak temperature associated with the melting of a resin composition sample in a temperature re-rise process after film formation was determined with a differential scanning calorimeter (DSC) and defined as a melting temperature (Tm; also referred to as crystal melting peak temperature).

<Crystallization Temperature (°C)>

An exothermic peak temperature associated with the crystallization of a resin composition sample in a temperature drop process down from 200°C after film formation was determined with a DSC and defined as a crystallization temperature (Tc; also referred to as crystallization peak temperature).

<Film Formability Data>

(1) Plate out to a roll: A roll surface visually observed and evaluated on contamination. A sample causing no contamination on the roll surface was evaluated as "Good" (without plate out); and a sample causing contamination on the roll surface was evaluated as "Poor" (with plate out).
(2) Releasability: The releasability was evaluated by determining how a molten film formed from the resin composition was peeled off from the fourth roll 4 in Fig. 1. A sample capable of being taken off onto the take-off rolls 5 was evaluated as "Good"; and a sample incapable of being taken off onto the take-off rolls 5 was evaluated as "Poor."
(3) Film surface condition: A surface of a film sample was visually observed. A sample having a smooth surface without roughness was evaluated as "Good"; and a sample having bank marks (irregularity due to uneven flow of the resin), rough skin, or pinholes was evaluated as "Poor".

<Melt Endotherm $\Delta$Hc' (J/g) of Region Crystallized upon Film Formation>

The melt endotherm $\Delta$Hc' (J/g) was calculated according to Expression (1) from a heat quantity $\Delta$Hc (J/g) of an exothermic peak associated with crystallization of a film sample in a temperature rise process after film formation and from a heat quantity $\Delta$Hm (J/g) associated with subsequent melting of the film sample, each measured with a DSC. Expression (1) is expressed as follows:

$$\Delta Hc' = \Delta Hm - \Delta Hc \qquad (1)$$

The DSC and measurement conditions employed for the measurements of the melting temperature (Tm), the crystallization temperature (Tc), and the melt endotherm $\Delta$Hc' of a region crystallized upon film formation are as follows.

Instrument: DSC 6220 supplied by SII NanoTechnology Inc.
Conditions:

Measurement temperature range: from 20°C to 200°C to 0°C to 200°C. Specifically, measurements were performed initially in a temperature rise process from 20°C up to 200°C, subsequently in a temperature drop process from 200°C down to 0°C, and finally in a temperature re-rise process from 0°C up to 200°C, respectively.
Temperature rise rate/drop rate: 2°C/min
Measurement atmosphere: Nitrogen atmosphere (200 ml/min)

No exothermic peak associated with the crystallization was observed in the temperature re-rise process. This led to a judgemnt that 100% of a crystallizable region is crystallized at a temperature drop rate of 2°C/min and verified the validity of the expression for the melt endotherm in the region crystallized upon film formation.

<Tear Strength (N/mm)>

The tear strength was measured according to "Paper-Determination of tearing resistance-Elmendorf tearing tester method" specified in JIS P 8116. A measuring instrument and measurement conditions employed are as follows.

Instrument: Elmendorf tear strength tester supplied by TESTER SANGYO CO., LTD.
Conditions:
Sample size: About 0.25 mm thick by 76 mm wide by 63 mm long, where five plies of 0.05 mm thick film are stacked to a total thickness of 0.25 mm.

The sample was cut out so that a direction parallel to the lengthwise direction would be a machine direction (hereinafter also referred to as "MD") upon film formation.
Calculation of Tear Strength: The tear strength was calculated according to following Expression (2):

$$T = (A \times p) / (n \times t \times 1000) \qquad (2)$$

wherein T represents the tear strength (N/mm);

A represents the measured value (mN);

p represents the number of specimens to be a standard for pendulum scale (16 in this instrument);

n represents the number of specimens that are torn simultaneously; and

t represents the average thickness (mm) per specimen

<Degree of Swelling>

A degree of swelling was measured by weighing a film or sheet sample (50 mm by 50 mm by 0.05 mm thick), immersing the sample in a solvent for 15 minutes, retrieving the sample from the solvent, removing the solvent from the sample surface with a waste rag, weighing the sample after immersion, and dividing the weight after immersion by the weight before immersion.

Two different solvents, i.e., toluene and ethyl acetate, were used respectively.

Judgment of acceptance: A sample having a degree of swelling of 2.0 or less was judged to be accepted.

<Initial Elastic Modulus (MPa), Breaking Strength (MPa), and Elongation (%)>

The initial elastic modulus, breaking strength, and elongation were measured according to "Plastics-Determination of tensile properties" specified in JIS K 7161.

A measurement insutument and measurement conditions employed are as follows.

Instrument: Tensile tester (Autograph AG-20kNG, supplied by Shimadzu Corporation)

Sample size: 0.05 mm thick by 10 mm wide by 100 mm long where the sample was cut out so that a direction parallel to the lengthwise direction be a machine direction (MD) upon film formation.

Measurement Conditions:

Chuck-to-chuck distance: 50 mm

Tensile speed: 300 mm/min

<Thermal Stability Test>

Samples 0.05 mm thick by 200 mm wide by 300 mm long were cut out. The samples were pinched at both ends with a clip and placed in an oven at 100°C for one minute. A sample maintaining its original shape after being retrieved from the oven was evaluated as having good thermal stability ("Good"), and a sample failing to maintain its original shape was evaluated as having poor thermal stability ("Poor").

<Workability Test>

Each sample was cut out to a size of 0.05 mm thick by 20 mm wide by 100 mm long and fixed between chucks in the tensile tester so as to receive a stress of 25 N/mm$^2$. The sample held between the chucks was then notched by 1 mm at its central part with a razor so that the notch extend perpendicular to MD. A sample not broken upon notching was evaluated as having good workability ("Good"), and a sample broken upon notching was evaluated as having poor workability ("Poor"). A measurement insutument and measurement conditions employed are as follows.

Instrument: Tensile tester (Autograph AG-20kNG, supplied by Shimadzu Corporation)

Sample size: 0.05 mm thick by 20 mm wide by 100 mm long where the sample was cut out so that a direction parallel to the lengthwise direction be a machine direction (MD) upon film formation.

Measurement conditions:

Chuck-to-chuck distance: 50 mm

Tensile speed: 50 mm/min (stopped at a stress of 25 N/mm$^2$)

Evaluation results of Examples I-1 to I-5 and Comparative Example I-1 are indicated in Table 1.

The evaluation results indicated in Table 1 demonstrate that the films of Examples I-1 to I-5 according to embodiments of the present invention each excelled both in thermal stability and workability; whereas the film of Comparative Example I-1 had poor workability.

[Table 1]

TABLE 1

| | | Examples | | | | | Comparative Example |
|---|---|---|---|---|---|---|---|
| | | I-1 | I-2 | I-3 | I-4 | I-5 | I-1 |
| Material (part by weight) | | | | | | | |
| | A1 | 97 | 97 | 94 | 94 | 85 | 100 |
| | B1 | 3 | 3 | 3 | 3 | 3 | 2 |
| | C1 | 1 | 1 | 1 | 1 | 1 | 1 |
| | D1 | 1 | 1 | 1 | 1 | 1 | 1 |
| | E1 | - | 3 | 6 | - | - | - |
| | E2 | 3 | - | - | - | - | - |
| | E3 | - | - | - | 6 | - | - |
| | E4 | - | - | - | - | 15 | - |
| Film thickness ($\mu$m) | | 50 | 50 | 50 | 50 | 50 | 50 |
| Resin composition DSC data (°C) | Melting temperature | 167 | 171 | 166 | 171 | 166 | 166 |
| | Crystallization temperature | 132 | 132 | 132 | 136 | 125 | 125 |
| Set temperature (°C) | Resin temperature in melt film formation step | 155 | 160 | 152 | 164 | 157 | 158 |
| | Crystallization promoting temperature | 130 | 132 | 110 | 136 | 110 | 125 |
| Film formability data | Plate out to roll | Good | Good | Good | Good | Good | Good |
| | Removability | Good | Good | Good | Good | Good | Good |
| | Film surface condition | Good | Good | Good | Good | Good | Good |
| Melt endotherm $\Delta$Hc' (J/g) in region crystallized upon film formation | | 23.0 | 18.8 | 18.2 | 15.9 | 16.6 | 21.1 |
| Tear strength (N/mm) | MD | 4.6 | 3.4 | 4.2 | 5.0 | 6.2 | 1.9 |
| | TD | 3.8 | 3.5 | 3.6 | 3.4 | 4.8 | 1.6 |
| Degree of swelling | Ethyl acetate | 1.3 | 1.3 | 1.5 | 1.6 | 1.7 | 1.2 |
| | Toluene | 1.7 | 1.6 | 1.5 | 1.9 | 1.8 | 1.0 |
| Initial elastic modulus (MPa) | MD | 2000 | 1910 | 1720 | 2020 | 2200 | 2780 |
| Breaking strength (MPa) | MD | 53 | 51 | 43 | 52 | 53 | 96 |
| Elongation (%) | MD | 5 | 5 | 5 | 5 | 45 | 11 |
| Thermal stability test | | Good | Good | Good | Good | Good | Good |
| Workability test | | Good | Good | Good | Good | Good | Poor |

EXAMPLE II-1

A resin composition was prepared in a blending ratio given in Table 2 below. The resin composition was melted and kneaded with a Banbury mixer and subjected to calendering film formation with a four-roll reverse L calendering line so as to form a molten film having a thickness of 50 $\mu$m (melt film formation step). Next, the molten film formed from the resin composition was allowed to pass through three rolls (take-off rolls) so that the upper side and the lower side of the film alternately came in contact with the rolls to promote crystallization (crystallization promoting step). The three rolls could be heated to any temperature and were arranged immediately downstream from the melt film formation step as illustrated in Fig. 1. The resin composition as the molten film was then solidified by passing through between cooling rolls and yielded a film (substrate). The surface temperature of the roll corresponding to the fourth roll 4 in Fig. 1 was regarded as the temperature of the resin composition in the melt film formation step (resin temperature upon melt film formation). The temperature of the resin composition in the crystallization promoting step was controlled so that the surface temperatures of the three take-off rolls 5 in Fig. 1 were adjusted to be a substantially identical temperature, and this temperature was regarded as the crystallization promoting temperature. The film formation was performed at a speed of 5 m/min, and the crystallization promoting step was substantially performed for a duration (take-off roll transit time) of about 5 seconds.

Independently, a release agent composition was prepared by mixing 100 parts by weight of an addition-curable thermosetting silicone (the trade name "KS-847T" supplied by Shin-Etsu Chemical Co., Ltd., 30 percent by weight toluene solution) with 1 part by weight of a platinum catalyst (the trade name "PL-50T" supplied by Shin-Etsu Chemical Co., Ltd., toluene solution) and dissolving them in 3000 parts by weight of heptane. The release agent composition was applied to the above-prepared film (separator substrate) so as to have a thickness of 0.2 $\mu$m after drying (after curing), heated/dried, and yield a separator.

EXAMPLES II-2 to II-5

Resin compositions were prepared in blending ratios given in Table 2, from which films (separator substrates) of Examples II-2 to II-5 were prepared, and subsequently separators were prepared each by the procedure of Example II-1.

COMPARATIVE EXAMPLE II-1

A resin composition was prepared in a blending ratio given in Table 2, from which a film (substrate) of Comparative Example II-1 was prepared, and subsequently a separator was prepared each by the procedure of Example II-1.

Properties of the separator substrates were measured by the above-mentioned methods. The measured properties were the melting temperature (°C), crystallization temperature (°C), film formability data, melt endotherm $\Delta$Hc' (J/g) of a region crystallized upon film formation, tear strength (N/mm), degree of swelling, initial elastic modulus (MPa), breaking strength (MPa), and elongation (%).

The separators were evaluated by the following methods.

<Thermal Stability Test>

Separator samples were cut out to a size of 200 mm wide by 300 mm long. The samples were pinched at both ends with a clip and placed in an oven at 100°C for one minute. A sample maintaining its original shape after being retrieved from the oven was evaluated as having good thermal stability ("Good"), and a sample failing to maintain its original shape was evaluated as having poor thermal stability ("Poor").

<Workability Test>

Each sample was cut out to a size of 0.05 mm thick by 20 mm wide by 100 mm long and fixed between chucks in the tensile tester so as to receive a stress of 25 N/mm$^2$. The sample held between the chucks was then notched by 1 mm at its central part with a razor so that the notch extend perpendicular to MD. A sample not broken upon notching was evaluated as having good workability ("Good"), and a sample broken upon notching was evaluated as having poor workability ("Poor"). A measurement insutument and measurement conditions employed are as follows.

 Instrument: Tensile tester (Autograph AG-20kNG, supplied by Shimadzu Corporation)
 Sample size: 0.05 mm thick by 20 mm wide by 100 mm long where the sample was cut out so that a direction parallel to the lengthwise direction be a machine direction (MD) upon film formation.
 Measurement conditions:

  Chuck-to-chuck distance: 50 mm
  Tensile speed: 50 mm/min (stopped at a strain of 25 N/mm$^2$)

Evaluation results of Examples II-1 to II-5 and Comparative Example II-1 are indicated in Table 2.
The evaluation results in Table 2 demonstrate that the separators of Examples II-1 to II-5 according to embodiments of the present invention each excelled in thermal stability and workability; whereas the separator of Comparative Example II-1 had poor workability.

[Table 2]

TABLE 2

| | | | Examples | | | | | Comparative Example |
|---|---|---|---|---|---|---|---|---|
| | | | II-1 | II-2 | II-3 | II-4 | II-5 | II-1 |
| Substrate | Materials (part by weight) | | | | | | | |
| | | A1 | 97 | 97 | 94 | 94 | 85 | 100 |
| | | B1 | 3 | 3 | 3 | 3 | 3 | 2 |
| | | C1 | 1 | 1 | 1 | 1 | 1 | 1 |
| | | D1 | 1 | 1 | 1 | 1 | 1 | 1 |
| | | E1 | - | 3 | 6 | - | - | - |
| | | E2 | 3 | - | - | - | - | - |
| | | E3 | - | - | - | 6 | - | - |
| | | E4 | - | - | - | - | 15 | - |
| | Film thickness ($\mu$m) | | 50 | 50 | 50 | 50 | 50 | 50 |
| | Resin composition DSC data (°C) | Melting temperature | 167 | 171 | 166 | 171 | 166 | 166 |
| | | Crystallization temperature | 132 | 132 | 132 | 136 | 125 | 125 |
| | Set temperature (°C) | Resin temperature in melt film formation step | 155 | 160 | 152 | 164 | 157 | 158 |
| | | Crystallization promoting temperature | 130 | 132 | 110 | 136 | 110 | 125 |
| | Film formability data | Plate out to roll | Good | Good | Good | Good | Good | Good |
| | | Removability | Good | Good | Good | Good | Good | Good |
| | | Film surface condition | Good | Good | Good | Good | Good | Good |
| | Melt endotherm $\Delta$Hc' (J/q) in region crystallized upon film formation | | 23.0 | 18.8 | 18.2 | 15.9 | 16.6 | 21.1 |
| | Tear strength (N/mm) | MD | 4.6 | 3.4 | 4.2 | 5.0 | 6.2 | 1.9 |
| | | TD | 3.8 | 3.5 | 3.6 | 3.4 | 4.8 | 1.6 |
| | Degree of swelling | Ethyl acetate | 1.3 | 1.3 | 1.5 | 1.6 | 1.7 | 1.2 |
| | | Toluene | 1.7 | 1.6 | 1.5 | 1.9 | 1.8 | 1.0 |
| | Initial elastic modulus (MPa) | MD | 2000 | 1910 | 1720 | 2020 | 2200 | 2780 |

(continued)

|  |  |  | Examples |  |  |  |  | Comparative Example |
|---|---|---|---|---|---|---|---|---|
|  |  |  | II-1 | II-2 | II-3 | II-4 | II-5 | II-1 |
|  | Breaking strength (MPa) | MD | 53 | 51 | 43 | 52 | 53 | 96 |
|  | Elongation (%) | MD | 5 | 5 | 5 | 5 | 45 | 11 |
| Separator evaluation |  | Thermal stability test | Good | Good | Good | Good | Good | Good |
|  |  | Workability test | Good | Good | Good | Good | Good | Poor |

EXAMPLE III-1

A resin composition was prepared in a blending ratio given in Table 3 below. The resin composition was melted and kenaded with a Banbury mixer, and subjected to calendering film formation with a four-roll reverse L calendering line so as to form a molten film having a thickness of 50 $\mu$m (melt film formation step). Next, the molten film formed from the resin composition was allowed to pass through three rolls (take-off rolls) so that the upper side and the lower side of the film alternately came in contact with the rolls to promote crystallization (crystallization promoting step). The three rolls could be heated to any temperature and were arranged immediately downstream from the melt film formation step as illustrated in Fig. 1. The resin composition as the molten film was then solidified by passing through between cooling rolls and yielded a film (substrate). The surface temperature of the roll corresponding to the fourth roll 4 in Fig. 1 was regarded as the temperature of the resin composition in the melt film formation step (resin temperature upon melt film formation). The temperature of the resin composition in the crystallization promoting step was controlled so that the surface temperatures of the three take-off rolls 5 in Fig. 1 were adjusted to be a substantially identical temperature, and this temperature was regarded as the crystallization promoting temperature. The film formation was performed at a speed of 5 m/min, and the crystallization promoting step was substantially performed for a duration (take-off roll transit time) of about 5 seconds.

Independently, a pressure-sensitive adhesive composition was prepared by mixing and dissolving 100 parts by weight of an acrylic polymer and 10 parts by weight of a rosin phenolic tackifier in toluene. The acrylic polymer was derived from 60 parts by weight of ethyl acrylate and 40 parts by weight of 2-ethylhexyl acrylate and had a weight-average molecular weight of about 40x $10^4$. The prepared pressure-sensitive adhesive composition was applied to the above-prepared film (substrate) so as to have a dried thickness of 50 $\mu$m, dried, and yielded a pressure-sensitive adhesive sheet.

EXAMPLES III-2 to III-5

Resin compositions were prepared in blending ratios given in Table 3 below, from which films (substrates) of Examples III-2 to III-5 were prepared by the procedure of Example III-1. In addition, pressure-sensitive adhesive sheets were prepared by the procedure of Example III-1.

COMPARATIVE EXAMPLE III-1

A resin composition was prepared in a blending ratio given in Table 3, from which a film (substrate) of Comparative Example III-1 was prepared by the procedure of Example III-1. In addition, a pressure-sensitive adhesive sheet was prepared by the procedure of Example III-1.

Properties of the substrates were measured by the above-mentioned methods. The measured properties were the melting temperature (°C), crystallization temperature (°C), film formability data, melt endotherm $\Delta$Hc' (J/g) of a region crystallized upon film formation, tear strength (N/mm), degree of swelling, initial elastic modulus (MPa), breaking strength (MPa), and elongation (%).

The pressure-sensitive adhesive sheets were evaluated by the following methods.

<Thermal Stability Test>

Each pressure-sensitive adhesive sheet sample was cut out to a size of 200 mm wide by 300 mm long. The sample was pinched at both ends with a clip and placed in an oven at 100°C for one minute. A sample maintaining its original shape after being retrieved from the oven was evaluated as having good thermal stability ("Good"), and a sample failing to maintain its original shape was evaluated as having poor thermal stability ("Poor").

<Workability Test>

Each sample was cut out to a size of 0.05 mm thick by 20 mm wide by 100 mm long and fixed between chucks in the tensile tester so as to receive a stress of 25 N/mm$^2$. The sample held between the chucks was then notched by 1 mm at its central part with a razor so that the notch extend perpendicular to MD. A sample not broken upon notching was evaluated as having good workability ("Good"), and a sample broken upon notching was evaluated as having poor workability ("Poor"). A measurement insutument and measurement conditions employed are as follows.

Instrument: Tensile tester (Autograph AG-20kNG, supplied by Shimadzu Corporation)
Sample size: 0.05 mm thick by 20 mm wide by 100 mm long where the sample was cut out so that a direction parallel to the lengthwise direction be a machine direction (MD) upon film formation.
Measurement conditions:

Chuck-to-chuck distance: 50 mm
Tensile speed: 50 mm/min (stopped at a strain of 25 N/mm$^2$)

Evaluation results of Examples III-1 to III-5 and Comparative Example III-1 are indicated in Table 3.
The evaluation results in Table 3 demonstrate that the pressure-sensitive adhesive sheets of Examples III-1 to III-5 according to embodiments of the present invention each excelled in thermal stability and workability; whereas the pressure-sensitive adhesive sheet of Comparative Example III-1 had poor workability.

[Table 3]

TABLE 3

| | | | Examples | | | | | Comparative Example |
|---|---|---|---|---|---|---|---|---|
| | | | III-1 | III-2 | III-3 | III-4 | III-5 | III-1 |
| | Materials (part by weight) | | | | | | | |
| | | A1 | 97 | 97 | 94 | 94 | 85 | 100 |
| | | B1 | 3 | 3 | 3 | 3 | 3 | 2 |
| | | C1 | 1 | 1 | 1 | 1 | 1 | 1 |
| | | D1 | 1 | 1 | 1 | 1 | 1 | 1 |
| | | E1 | - | 3 | 6 | - | - | - |
| | | E2 | 3 | - | - | - | - | - |
| | | E3 | - | - | - | 6 | - | - |
| | | E4 | - | - | - | - | 15 | - |
| | Film thickness (μm) | | 50 | 50 | 50 | 50 | 50 | 50 |
| | Resin composition DSC data (°C) | Melting temperature | 167 | 171 | 166 | 171 | 166 | 166 |
| | | Crystallization temperature | 132 | 132 | 132 | 136 | 125 | 125 |

(continued)

| | | | Examples | | | | | Comparative Example |
|---|---|---|---|---|---|---|---|---|
| | | | III-1 | III-2 | III-3 | III-4 | III-5 | III-1 |
| Substrate | Set temperature (°C) | Resin temperature in melt film formation step | 155 | 160 | 152 | 164 | 157 | 158 |
| | | Crystallization promoting temperature | 130 | 132 | 110 | 136 | 110 | 125 |
| | Film formability data | Plate out to roll | Good | Good | Good | Good | Good | Good |
| | | Removability | Good | Good | Good | Good | Good | Good |
| | | Film surface condition | Good | Good | Good | Good | Good | Good |
| | Melt endotherm $\Delta$Hc' (J/q) in region crystallized upon film formation | | 23.0 | 18.8 | 18.2 | 15.9 | 16.6 | 21.1 |
| | Tear strength (N/mm) | MD | 4.6 | 3.4 | 4.2 | 5.0 | 6.2 | 1.9 |
| | | TD | 3.8 | 3.5 | 3.6 | 3.4 | 4.8 | 1.6 |
| | Degree of swelling | Ethyl acetate | 1.3 | 1.3 | 1.5 | 1.6 | 1.7 | 1.2 |
| | | Toluene | 1.7 | 1.6 | 1.5 | 1.9 | 1.8 | 1.0 |
| | Initial elastic modulus (MPa) | MD | 2000 | 1910 | 1720 | 2020 | 2200 | 2780 |
| | Breaking strength (MPa) | MD | 53 | 51 | 43 | 52 | 53 | 96 |
| | Elongation (%) | MD | 5 | 5 | 5 | 5 | 45 | 11 |
| Pressure-sensitive adhesive sheet evaluation | Thermal stability test | | Good | Good | Good | Good | Good | Good |
| | Workability test | | Good | Good | Good | Good | Good | Poor |

EXAMPLE IV-1

A resin composition was prepared in a blending ratio given in Table 4 below. The resin composition was melted and kenaded with a Banbury mixer, and subjected to calendering film formation with a four-roll reverse L calendering line so as to form a molten film having a thickness of 50 $\mu$m (melt film formation step). Next, the molten film formed from the resin composition was allowed to pass through three rolls (take-off rolls) so that the upper side and the lower side of the film alternately came in contact with the rolls to promote crystallization (crystallization promoting step). The three rolls could be heated to any temperature and were arranged immediately downstream from the melt film formation step as illustrated in Fig. 1. The resin composition as the molten film was then solidified by passing through between cooling rolls and yielded a film (substrate). The surface temperature of the roll corresponding to the fourth roll 4 in Fig. 1 was regarded as the temperature of the resin composition in the melt film formation step (resin temperature upon melt film formation). The temperature of the resin composition in the crystallization promoting step was controlled so that the surface temperatures of the three take-off rolls 5 in Fig. 1 were adjusted to be a substantially identical temperature, and this temperature was regarded as the crystallization promoting temperature. The film formation was performed at a speed of 5 m/min, and the crystallization promoting step was substantially performed for a duration (take-off roll transit time) of about 5 seconds.

Independently, a pressure-sensitive adhesive composition was prepared by blending a 20 percent by weight toluene solution of an acrylic polymer with 2 parts by weight of an epoxy crosslinking agent (the trade name "TETRAD C" supplied by MITSUBISHI GAS CHEMCIAL COMPANY, INC.) and 2 parts by weight an isocyanate crosslinking agent (the trade name "CORONATE L" supplied by Nippon Polyurethane Industry Co., Ltd.) each per 100 parts by weight of the acrylic polymer. The acrylic polymer was derived from 70 parts by weight of 2-ethylhexyl acrylate, 30 parts by weight of N-acryloylmorpholine, and 3 parts of acrylic acid and had a weight-average molecular weight of $40 \times 10^4$. The pressure-sensitive adhesive composition was applied to the above-prepared film (substrate) so as to have a dry thickness of 5 μm, dried, and yielded a protective film.

EXAMPLES IV-2 to IV-5

Resin compositions were prepared in blending ratios given in Table 4, from which films (substrates) of Examples IV-2 to IV-5 were prepared, and subsequently protective films were prepared each by the procedure of Example IV-1.

COMPARATIVE EXAMPLE IV-1

A resin composition was prepared in a blending ratio given in Table 4, from which a film (substrate) of Comparative Example IV-1 was prepared, and subsequently a protective film was prepared each by the procedure of Example IV-1.

Properties of the substrates were measured by the above-mentioned methods. The measured properties were the melting temperature (°C), crystallization temperature (°C), film formability data, melt endotherm ΔHc' (J/g) of a region crystallized upon film formation, tear strength (N/mm), degree of swelling, initial elastic modulus (MPa), breaking strength (MPa), and elongation (%).

The protective films were evaluated by the following methods.

<Thermal Stability Test>

Each protective film sample was cut out to a size of 200 mm wide by 300 mm long. The sample was pinched at both ends with a clip and placed in an oven at 100°C for one minute. A sample maintaining its original shape after being retrieved from the oven was evaluated as having good thermal stability ("Good"), and a sample failing to maintain its original shape was evaluated as having poor thermal stability ("Poor").

<Workability Test>

Each sample was cut out to a size of 0.05 mm thick by 20 mm wide by 100 mm long and fixed between chucks in the tensile tester so as to receive a stress of 25 $N/mm^2$. The sample held between the chucks was then notched by 1 mm at its central part with a razor so that the notch extend perpendicular to MD. A sample not broken upon notching was evaluated as having good workability ("Good"), and a sample broken upon notching was evaluated as having poor workability ("Poor"). A measurement insutument and measurement conditions employed are as follows.

Instrument: Tensile tester (Autograph AG-20kNG, supplied by Shimadzu Corporation)
Sample size: 0.05 mm thick by 20 mm wide by 100 mm long where the sample was cut out so that a direction parallel to the lengthwise direction be a machine direction (MD) upon film formation.
Measurement conditions:

Chuck-to-chuck distance: 50 mm
Tensile speed: 50 mm/min (stopped at a strain of 25 $N/mm^2$)

Evaluation results of Examples IV-1 to IV-5 and Comparative Example IV-1 are indicated in Table 4.

The evaluation results in Table 4 demonstrate that the protective films of Examples IV-1 to IV-5 according to embodiments of the present invention each excelled in thermal stability and workability; whereas the protective film of Comparative Example IV-1 had poor workability.

[Table 4]

TABLE 4

| | | | Examples | | | | | Comparative Example |
|---|---|---|---|---|---|---|---|---|
| | | | IV-1 | IV-2 | IV-3 | IV-4 | IV-5 | IV-1 |
| Substrate | | Materials (part by weight) | | | | | | |
| | | A1 | 97 | 97 | 94 | 94 | 85 | 100 |
| | | B1 | 3 | 3 | 3 | 3 | 3 | 2 |
| | | C1 | 1 | 1 | 1 | 1 | 1 | 1 |
| | | D1 | 1 | 1 | 1 | 1 | 1 | 1 |
| | | E1 | - | 3 | 6 | - | - | - |
| | | E2 | 3 | - | - | - | - | - |
| | | E3 | - | - | - | 6 | - | - |
| | | E4 | - | - | - | - | 15 | - |
| | | Film thickness ($\mu$m) | 50 | 50 | 50 | 50 | 50 | 50 |
| | Resin composition DSC data (°C) | Melting temperature | 167 | 171 | 166 | 171 | 166 | 166 |
| | | Crystallization temperature | 132 | 132 | 132 | 136 | 125 | 125 |
| | Set temperature (°C) | Resin temperature in melt film formation step | 155 | 160 | 152 | 164 | 157 | 158 |
| | | Crystallization promoting temperature | 130 | 132 | 110 | 136 | 110 | 125 |
| | Film formability data | Plate out to roll | Good | Good | Good | Good | Good | Good |
| | | Removability | Good | Good | Good | Good | Good | Good |
| | | Film surface condition | Good | Good | Good | Good | Good | Good |
| | Melt endotherm $\Delta Hc'$ (J/q) in region crystallized upon film formation | | 23.0 | 18.8 | 18.2 | 15.9 | 16.6 | 21.1 |
| | Tear strength (N/mm) | MD | 4.6 | 3.4 | 4.2 | 5.0 | 6.2 | 1.9 |
| | | TD | 3.8 | 3.5 | 3.6 | 3.4 | 4.8 | 1.6 |
| | Degree of swelling | Ethyl acetate | 1.3 | 1.3 | 1.5 | 1.6 | 1.7 | 1.2 |
| | | Toluene | 1.7 | 1.6 | 1.5 | 1.9 | 1.8 | 1.0 |
| | Initial elastic modulus (MPa) | MD | 2000 | 1910 | 1720 | 2020 | 2200 | 2780 |
| | Breaking strength (MPa) | MD | 53 | 51 | 43 | 52 | 53 | 96 |
| | Elongation (%) | MD | 5 | 5 | 5 | 5 | 45 | 11 |
| Protective film evaluation | | Thermal stability test | Good | Good | Good | Good | Good | Good |
| | | Workability test | Good | Good | Good | Good | Good | Poor |

31

Industrial Applicability

Polylactic acid-based films or sheets according to emobidiments of the present invention are resistant to melting and deformation even at an elevated temperature higher than 100°C. The films or sheets are characteristically resistant to breaking and tearing while maintaining their original rigidity, even when the films or sheets are wound into rolls and receive a tension upon production or working of the films or sheets. The films or sheets are therefore applicable typically as substrates of pressure-sensitive adhesive tapes or sheets; substrates of separators typically for pressure-sensitive adhesive tapes or sheets; and substrates of protective films. Reference Signs List

| 1 | first roll |
| 2 | second roll |
| 3 | third roll |
| 4 | fourth roll |
| 5 | take-off roll |
| 6 | cooling roll |
| 7 | cooling roll |
| 8 | resin composition |
| 9 | bank (resin pool) |
| 10 | extruder head |

**Claims**

1. A polylactic acid-based film or sheet as a resin film or sheet comprising a polylactic acid (A), wherein the polylactic acid-based film or sheet is formed from a resin composition including a polylactic acid (A) in combination with a tear resistance improver (E), wherein the tear resistance improver (E) is selected from the group comprising (a) a polyglycerol fatty acid ester and/or a polyglycerol-condensed hydroxy fatty acid ester (b) a core-shell structured polymer including a particulate rubber and a graft layer present outside of the particulate rubber, and (c) a soft aliphatic polyester, or combinations thereof,
wherein the polylactic acid-based film or sheet has a melt endotherm ΔHc' of 10 J/g or more, where the melt endotherm ΔHc' is of a region crystallized upon film formation and specified by Expression (1) expressed as follows:

$$\Delta Hc' = \Delta Hm - \Delta Hc \quad (1)$$

wherein ΔHc represents an exotherm (J/g) associated with crystallization of the film or sheet in a temperature rise process after film formation; and ΔHm represents an endotherm (J/g) associated with subsequent melting of the film or sheet, where ΔHc and ΔHm are determined by DSC; and
the polylactic acid-based film or sheet has a tear strength of 2.5 N/mm or more both in a machine direction (MD) and in a transverse direction (TD), the tear strength determined according to "Paper-Determination of tearing resistance-Elmendorf tearing tester method" specified in JIS P 8116.

2. The polylactic acid-based film or sheet of claim 1, further comprising a fluoropolymer (B) in an amount of 0.5 to 15 parts by weight per 100 parts by weight of the polylactic acid (A).

3. The polylactic acid-based film or sheet of claim 2, wherein the fluoropolymer (B) is a tetrafluoroethylene polymer.

4. The polylactic acid-based film or sheet of any one of claims 1 to 3, further comprising a crystallization promoter (C) in an amount of 0.1 to 15 parts by weight per 100 parts by weight of the polylactic acid (A).

5. The polylactic acid-based film or sheet of any one of claims 1 to 4, further comprising an acidic-functional-group-modified olefinic polymer (D) in an amount of 0.1 to 10 parts by weight per 100 parts by weight of the polylactic acid (A), the acidic-functional-group-modified olefinic polymer (D) having an acid value of 10 to 70 mg KOH/g, as measured according to neutralization titrimetry specified in JIS K0070-1992, and a weight-average molecular weight of 10000 to 80000 as measured by gel permeation chromatography GPC in terms of a polystyrene standard as described in the specification.

6. The polylactic acid-based film or sheet of any one of claims 1 to 5, as a film or sheet formed by melt film formation.

7. The polylactic acid-based film or sheet of claim 6, wherein the melt film formation is calendering.

8. A separator comprising a separator substrate; and a release-agent-treated layer present on or above at least one side of the separator substrate, wherein the separator substrate is composed of the polylactic acid-based film or sheet of any one of claims 1 to 7.

9. A pressure-sensitive adhesive tape or sheet comprising a substrate; and a pressure-sensitive adhesive layer present on or above at least one side of the substrate, wherein the substrate is composed of the polylactic acid-based film or sheet of any one of claims 1 to 7.

10. A protective film comprising a substrate; and a removable pressure-sensitive adhesive layer present on or above at least one side of the substrate, wherein the substrate is composed of the polylactic acid-based film or sheet of any one of claims 1 to 7.


**Patentansprüche**

1. Polymilchsäure-basierter Film oder Polymilchsäure-basierte Folie als ein Harzfilm oder eine Folie, umfassend eine Polymilchsäure (A), wobei der Polymilchsäure-basierte Film oder die Polymilchsäure-basierte Folie aus einer Harzzusammensetzung gebildet wird, beinhaltend eine Polymilchsäure (A) in Kombination mit einem Reißfestigkeitsverbesserer (E), wobei der Reißfestigkeitsverbesserer (E) ausgewählt ist aus der Gruppe, umfassend (a) einen Polyglycerolfettsäureester und/oder einen Polyglycerol-kondensierten Hydroxyfettsäureester, (b) ein Polymer mit einer Kern-Schale-Struktur, beinhaltend einen partikulären Gummi und eine Pfropfschicht, anwesend an der Außenseite des partikulären Gummis, und (c) einen weichen aliphatischen Polyester, oder Kombinationen davon, wobei der Polymilchsäure-basierte Film oder die Polymilchsäure-basierte Folie ein Schmelzendotherm ΔHc' von 10 J/g oder mehr besitzt, wobei das Schmelzendotherm ΔHc' von einer Region ist, die bei Filmbildung kristallisiert ist und durch Ausdruck (1) dargestellt ist, ausgedrückt wie folgt:

$$\Delta Hc' = \Delta Hm = \Delta Hc \qquad (1),$$

wobei ΔHc ein Exotherm (J/g) darstellt, assoziiert mit Kristallisation des Films oder der Folie in einem Temperaturerhöhungsprozess nach Filmbildung; und ΔHm ein Endotherm (J/g) darstellt, assoziiert mit nachträglichem Schmelzen des Films oder der Folie, wobei ΔHc und ΔHm durch DSC bestimmt werden; und wobei der Polymilchsäure-basierte Film oder die Polymilchsäure-basierte Folie eine Reißfestigkeit von 2,5 N/mm oder mehr besitzt, sowohl in Maschinenrichtung (MD) als auch in transverser Richtung (TD), wobei die Reißfestigkeit bestimmt wird gemäß "Papier-Bestimmung der Reißfestigkeit - Elmendorf Reißfähigkeitstestverfahren", spezifiziert in JIS P 8116.

2. Der Polymilchsäure-basierte Film oder die Polymilchsäure-basierte Folie nach Anspruch 1, weiter umfassend ein Fluorpolymer (B) in einer Menge von 0,5 bis 15 Gewichtsteile pro 100 Gewichtsteile der Polymilchsäure (A).

3. Der Polymilchsäure-basierte Film oder die Polymilchsäure-basierte Folie nach Anspruch 2, wobei das Fluorpolymer (B) ein Tetrafluorethylenpolymer ist.

4. Der Polymilchsäure-basierte Film oder die Polymilchsäure-basierte Folie nach irgendeinem der Ansprüche 1 bis 3, weiter umfassend einen Kristallisationsbeschleuniger (C) in einer Menge von 0,1 bis 15 Gewichtsteilen pro 100 Gewichtsteile der Polymilchsäure (A).

5. Der Polymilchsäure-basierte Film oder die Polymilchsäure-basierte Folie nach irgendeinem der Ansprüche 1 bis 4, weiter umfassend ein olefinisches Polymer(D), das mit einer acidischen funktionalen Gruppe modifiziert ist, in einer Menge von 0,1 bis 10 Gewichtsteilen pro 100 Gewichtsteile der Polymilchsäure (A), wobei das olefinische Polymer (D), das mit einer acidischen funktionalen Gruppe modifiziert ist, einen Säurewert von 10 bis 70 mg KOH/g, gemessen gemäß Neutralisationstitrimetrie, spezifiziert in JIS K0070-1992, und ein gewichtsgemitteltes Molekulargewicht von 10.000 bis 80.000, gemessen durch Gelpermeationschromatographie GPC in Bezug auf einen Polystyrol-Standard, wie in der Beschreibung beschrieben, besitzt.

6. Der Polymilchsäure-basierte Film oder die Polymilchsäure-basierte Folie nach irgendeinem der Ansprüche 1 bis 5, als ein Film oder eine Folie, gebildet durch Schmelzfilmbildung.

7. Der Polymilchsäure-basierte Film oder die Polymilchsäure-basierte Folie nach Anspruch 6, wobei die Schmelzfilmbildung Kalendern ist.

8. Separator, umfassend ein Separatorsubstrat; und eine Loslösungsmittel-behandelte Schicht, anwesend auf oder über mindestens einer Seite des Separatorsubstrats, wobei das Separatorsubstrat zusammengesetzt ist aus dem Polymilchsäure-basierten Film oder der Polymilchsäure-basierten Folie nach irgendeinem der Ansprüche 1 bis 7.

9. Druckempfindliches Klebeband oder druckempfindliche Klebefolie, umfassend ein Substrat; und eine druckempfindliche Klebeschicht, anwesend auf oder über mindestens einer Seite des Substrats, wobei das Substrat zusammengesetzt ist aus dem Polymilchsäure-basierten Film oder der Polymilchsäure-basierten Folie nach irgendeinem der Ansprüche 1 bis 7.

10. Schutzfilm, umfassend ein Substrat; und eine entfernbare druckempfindliche Klebeschicht, anwesend auf oder über mindestens einer Seite des Substrats; wobei das Substrat zusammengesetzt ist aus dem Polymilchsäure-basierten Film oder der Polymilchsäure-basierten Folie nach irgendeinem der Ansprüche 1 bis 7.


**Revendications**

1. Film ou feuille à base d'acide polylactique en tant que film ou feuille de résine comprenant un acide polylactique (A), le film ou la feuille à base d'acide polylactique étant formé à partir d'une composition de résine incluant un acide polylactique (A) associé à un agent améliorant la résistance à la déchirure (E), l'agent améliorant la résistance à la déchirure (E) étant choisi dans le groupe comprenant (a) un ester d'acide gras et de polyglycérol et/ou un ester d'acide gras hydroxylé condensé avec un polyglycérol, (b) un polymère à structure coeur-enveloppe incluant un caoutchouc particulaire et une couche greffée présente à l'extérieur du caoutchouc particulaire et (c) un polyester aliphatique mou, ou des combinaisons de ceux-ci,
le film ou la feuille à base d'acide polylactique ayant une différence d'enthalpie endothermique de fusion ΔHc' de 10 J/g ou plus, la différence d'enthalpie endothermique de fusion ΔHc' correspondant à une région cristallisée lors de la formation du film et étant spécifiée par l'expression (1) exprimée comme suit :

$$\Delta Hc' = \Delta Hm - \Delta Hc \qquad (1)$$

où ΔHc représente une différence d'enthalpie exothermique (J/g) associée à une cristallisation du film ou de la feuille lors d'une opération d'élévation de température après formation du film; et ΔHm représente un endotherme (J/g) associé à une fusion subséquente du film ou de la feuille, ΔHc et ΔHm étant déterminés par DSC ; et
le film ou la feuille à base d'acide polylactique ayant une résistance à la déchirure de 2,5 N/mm ou plus tant dans le sens machine (MD) que dans le sens travers (TD), la résistance à la déchirure étant déterminée selon « Papier - Détermination de la résistance à la déchirure - Méthode du testeur de déchirure Elmendorf » spécifiée dans la JIS P 8116.

2. Film ou feuille à base d'acide polylactique selon la revendication 1, comprenant en outre un polymère fluoré (B) en une quantité de 0,5 à 15 parties en poids pour 100 parties en poids de l'acide polylactique (A).

3. Film ou feuille à base d'acide polylactique selon la revendication 2, dans laquelle le polymère fluoré (B) est un polymère de tétrafluoroéthylène.

4. Film ou feuille à base d'acide polylactique selon l'une quelconque des revendications 1 à 3, comprenant en outre un promoteur de cristallisation (C) en une quantité de 0,5 à 15 parties en poids pour 100 parties en poids de l'acide polylactique (A).

5. Film ou feuille à base d'acide polylactique selon l'une quelconque des revendications 1 à 4, comprenant en outre un polymère oléfinique modifié par un groupe fonctionnel acide (D) en une quantité de 0,1 à 10 parties en poids pour 100 parties en poids de l'acide polylactique (A), le polymère oléfinique modifié par un groupe fonctionnel acide (D) ayant un indice d'acide de 10 à 70 mg de KOH/g, ainsi que mesuré par titrimétrie de neutralisation spécifiée dans la JIS K0070-1992, et une masse moléculaire moyenne en poids de 10 000 à 80 000 ainsi que mesurée par chromatographie par perméation de gel GPC en termes d'étalon polystyrène comme décrit dans la spécification.

6. Film ou feuille à base d'acide polylactique selon l'une quelconque des revendications 1 à 5, en tant que film ou feuille formé par formation de film à l'état fondu.

7. Film ou feuille à base d'acide polylactique selon la revendication 6, la formation de film à l'état fondu étant un calandrage.

8. Séparateur comprenant un substrat de séparateur ; et une couche traitée par un agent antiadhésif présente sur ou au-dessus d'au moins un côté du substrat de séparateur, le substrat de séparateur étant composé du film ou de la feuille d'acide polylactique selon l'une quelconque des revendications 1 à 7.

9. Bande ou feuille adhésive sensible à la pression comprenant un substrat ; et une couche d'adhésif sensible à la pression présente sur ou au-dessus d'au moins un côté du substrat, le substrat étant composé du film ou de la feuille à base d'acide polylactique selon l'une quelconque des revendications 1 à 7.

10. Film protecteur comprenant un substrat ; et une couche d'adhésif sensible à la pression présente sur ou au-dessus d'au moins un côté du substrat, le substrat étant composé du film ou de la feuille à base d'acide polylactique selon l'une quelconque des revendications 1 à 7.

[Fig. 1]

[Fig. 2]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11116788 A
- JP 2010106272 A
- WO 201112264 A
- EP 2530110 A
- EP 2522696 A
- EP 2554596 A
- WO 2010038833 A
- JP 2007291293 B
- WO 20101344 A